(19) Europäisches Patentamt / European Patent Office / Office européen des brevets

(11) **EP 4 376 511 A1**

(12) **EUROPEAN PATENT APPLICATION**
published in accordance with Art. 153(4) EPC

(43) Date of publication:
**29.05.2024  Bulletin 2024/22**

(21) Application number: **22845261.1**

(22) Date of filing: **18.07.2022**

(51) International Patent Classification (IPC):
**H04W 64/00** (2009.01)

(52) Cooperative Patent Classification (CPC):
**H04L 5/00; H04W 64/00**

(86) International application number:
**PCT/CN2022/106212**

(87) International publication number:
**WO 2023/001096 (26.01.2023 Gazette 2023/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **19.07.2021  CN 202110815286**

(71) Applicant: **Vivo Mobile Communication Co., Ltd.
Dongguan, Guangdong 523863 (CN)**

(72) Inventors:
 • **WANG, Yuanyuan
  Dongguan, Guangdong 523863 (CN)**
 • **WU, Huaming
  Dongguan, Guangdong 523863 (CN)**
 • **PENG, Shuyan
  Dongguan, Guangdong 523863 (CN)**
 • **SI, Ye
  Dongguan, Guangdong 523863 (CN)**

(74) Representative: **Conti, Marco
Bugnion S.p.A.
Via di Corticella, 87
40128 Bologna (IT)**

(54) **POSITIONING METHOD AND APPARATUS**

(57)    This application discloses a positioning method and apparatus, and relates to the field of communication technologies. The method includes: transmitting, by a first user equipment, an SL positioning reference signal according to a mapping rule and/or a sequence definition, where the mapping rule is used for determining a mapping configuration of the SL positioning reference signal, the sequence definition is used for determining a sequence feature and/or a pattern of the SL positioning reference signal, the SL positioning reference signal is used for determining location information of the first user equipment and/or a second user equipment, and the second user equipment is an opposite user equipment that performs SL communication or SL positioning with the first user equipment.

201

A first user equipment transmits an SL positioning reference signal according to a mapping rule and/or a sequence definition

FIG. 2

EP 4 376 511 A1

**Description**

**CROSS-REFERENCE TO RELATED APPLICATIONS**

This application claims priority to Chinese Patent Application No. 202110815286.9, filed with the National Intellectual Property Administration, PRC on July 19, 2021, which is incorporated herein by reference in its entirety.

**TECHNICAL FIELD**

This application relates to the field of communication technologies, and in particular, to a positioning method and apparatus.

**BACKGROUND**

A long term evolution (long term evolution, LTE) system supports sidelink transmission, that is, data transmission between user equipments (user equipments, UEs) is directly performed on a physical layer. An LTE sidelink performs communication based on broadcast. The LTE sidelink may be configured to support basic security communication of vehicle to everything (vehicle to everything, V2X), but is not applicable to other more advanced V2X services. A 5G new radio (new radio, NR) system will support more advanced sidelink transmission designs, such as unicast, broadcast, multicast, and the like, to support more comprehensive service types.

There are various absolute and relative positioning requirements in SL communication, but how to meet corresponding requirements has not been defined.

**SUMMARY**

An objective of embodiments of this application is to provide a positioning method and apparatus, which can resolve a problem of meeting positioning requirements in SL communication.

According to a first aspect, a positioning method is provided, including:

transmitting, by a first user equipment, an SL positioning reference signal according to a mapping rule and/or a sequence definition, where

the mapping rule is used for determining a mapping configuration of the SL positioning reference signal, the sequence definition is used for determining a sequence feature and/or a pattern of the SL positioning reference signal, the SL positioning reference signal is used for determining location information of the first user equipment and/or a second user equipment, and the second user equipment is an opposite user equipment that performs SL communication or SL positioning with the first user equipment.

According to a second aspect, a positioning apparatus is provided, used in a user equipment and including:

a transmission module, configured to transmit, by a first user equipment, an SL positioning reference signal according to a mapping rule and/or a sequence definition, where

the mapping rule is used for determining a mapping configuration of the SL positioning reference signal, the sequence definition is used for determining a sequence feature and/or a pattern of the SL positioning reference signal, the SL positioning reference signal is used for determining location information of the first user equipment and/or a second user equipment, and the second user equipment is an opposite user equipment that performs SL communication or SL positioning with the first user equipment.

According to a third aspect, a user equipment is provided, including a processor, a memory, and a program stored in the memory and executable on the processor, the program, when executed by the processor, implementing the steps of the method according to the first aspect.

According to a fourth aspect, a readable storage medium is provided. The readable storage medium stores a program or instructions, the program or instructions, when executed by the processor, implementing the method according to the first aspect.

According to a fifth aspect, a computer program product is provided. The computer program product is stored in a non-volatile storage medium, and the computer program product is executed by at least one processor to implement the steps of the method according to the first aspect.

According to a seventh aspect, a chip is provided, including a processor and a communication interface, where the communication interface is coupled to the processor, and the processor is configured to run a program or instructions to implement the method according to the first aspect.

According to a seventh aspect, a communication device is provided, where the communication device is configured to perform the steps of the method according to the first aspect.

In this embodiment of this application, by using the mapping rule for determining the mapping configuration of the SL positioning reference signal and the sequence definition for determining the sequence feature and/or the pattern of the SL positioning reference signal, transmission of the SL positioning reference signal between the first user equipment and the second user equipment is implemented, and positioning requirements in SL communication are met.

## BRIEF DESCRIPTION OF THE DRAWINGS

FIG. 1a is a schematic structural diagram of an existing SL communication system;
FIG. 1b is a schematic flowchart of selecting or reselecting a resource by an existing user equipment;
FIG. 2 is a schematic flowchart of a positioning method according to an embodiment of this application;
FIG. 3a to FIG. 3m are schematic diagrams of application scenarios according to an embodiment of this application;
FIG. 4a and FIG. 4b are schematic diagrams of application scenarios according to an embodiment of this application;
FIG. 5 is a schematic diagram of an application scenario according to an embodiment of this application;
FIG. 6 is a schematic structural diagram of a positioning apparatus according to an embodiment of this application; and
FIG. 7 is a schematic structural diagram of a user equipment according to an embodiment of this application.

## DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person skilled in the art based on the embodiments of this application without creative efforts shall fall within the protection scope of this application.

In the specification and the claims of this application, the terms "first", "second", and so on are intended to distinguish similar objects but do not necessarily indicate a specific order or sequence. It is to be understood that the term used in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated obj ects.

It is to be noted that, the technologies described in the embodiments of this application are not limited to a long term evolution (long term evolution, LTE)/LTE-Advanced (LTE-advanced, LTE-A) system, or may be applied to other wireless communication systems such as code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single-carrier frequency-division multiple access (single-carrier frequency-division multiple access, SC-FDMA), and another system. In the embodiments of this application, the terms "system" and "network" are usually interchangeably used, and the technology described herein can be applied to the systems and radio technologies mentioned above, and can also be applied to other systems and radio technologies. However, although the technologies are also applicable to applications other than NR system applications, for example, a 6th generation (6th Generation, 6G) communication system, a new radio (new radio, NR) system is exemplarily described in the following descriptions, and the term "NR" is used in most of the following descriptions.

To better understand the solutions of the embodiments of this application, content is first described below.

Brief introduction of V2X

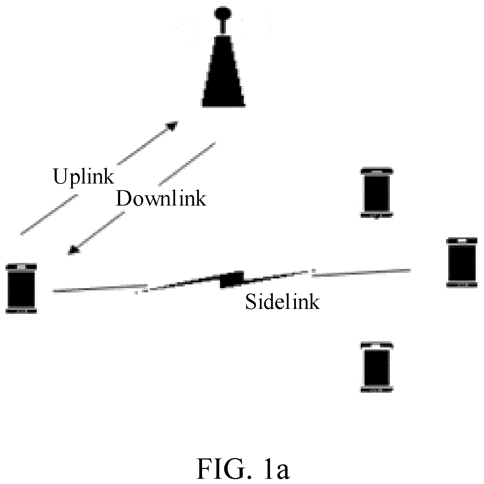

A long term evolution (long term evolution, LTE) system supports sidelink transmission, that is, data transmission between user equipments (user equipments, UEs) is directly performed on a physical layer. FIG. 1a shows a communication system including SL communication. An LTE sidelink performs communication based on broadcast. The LTE sidelink may be configured to support basic security communication of vehicle to everything (vehicle to everything, V2X), but is not applicable to other more advanced V2X services. A 5G NR (new radio) system will support more advanced sidelink transmission designs, such as unicast, broadcast, multicast, and the like, to support more comprehensive service types.

A long term evolution (long term evolution, LTE) system supports sidelink transmission from the 12th release, which is used for data transmission between user equipments (user equipments, UEs) without using a network device.

Resource allocation

NR V2X defines two resource allocation modes (modes), one is mode1 that schedules resources for a base station; and the other is mode2, where the UE determines what resources to use for transmission or another UE to schedule the UE. In this case, resource information may be from a broadcast message or pre-configured information of the base station. If the UE works within a range of the base station and has a radio resource control (radio resource control, RRC) connection with the base station, the UE may work in mode1 and/or mode2. If the UE works within the range of the base station but has no RRC connection with the base station, the UE may only work in mode2. If the UE is outside the range of the base station, the UE may only work in mode2 and perform V2X transmission based on the pre-configured information.

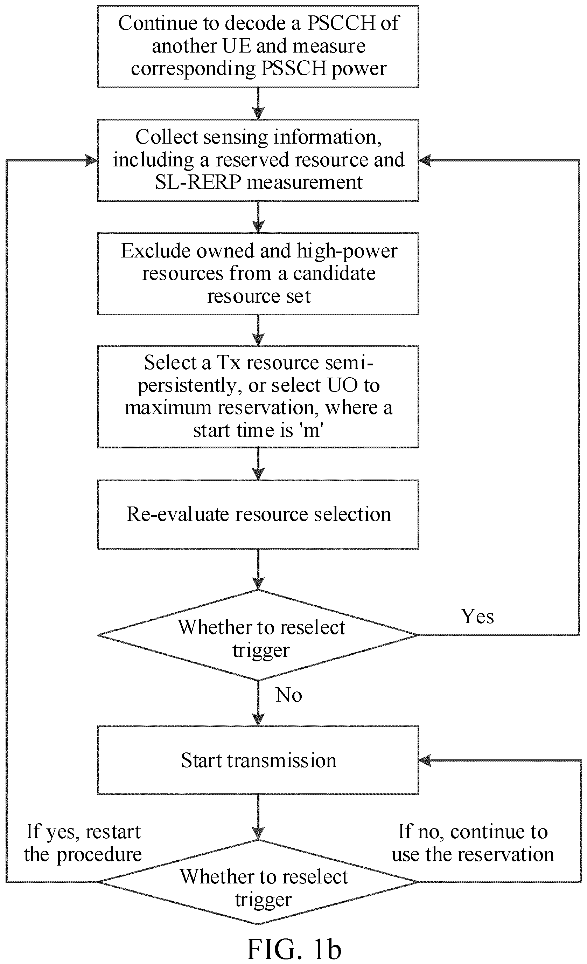

For mode2, a specific working method is as follows: 1) After resource selection is triggered, a transmit user equipment (transmit user equipment, TX UE) first determines a resource selection window, where a lower boundary of the resource selection window is at a time T1 after the resource selection is triggered, an upper boundary of resource selection is at a time T2 time after triggering, T2 is a value selected by the UE implementation within a packet delay budget (packet delay budget, PDB) in TB transmission, and T2 is not earlier than T1. 2) Before resource selection, the UE needs to determine a candidate resource set (candidate resource set) for resource selection, based on comparison of a reference signal receiving power (reference signal receiving power, RSRP) measured on a resource within the resource selection window and a corresponding RSRP threshold (threshold), if the RSRP is lower than the RSRP threshold, the resource may be included in the candidate resource set. 3) After the resource set is determined, the UE randomly selects transmission resources from the candidate resource set. In addition, the UE may reserve transmission resources for subsequent transmission during this transmission. A specific procedure is shown in FIG. 1b.

Comparison of related signals supported by V2X with UU positioning reference signals, and refer to Table 1 for details

Table 1

| Signal feature | | R16 PRS (UE receives a signal) Gold | R16 SRS (UE transmits a signal) ZC | Sidelink SSB (transmit and receive) ZC | Sidelink CSI-RS (only unicast) | Sidelink DMRS (precoded) Gold | Sidelink PTRS (precoded) Only for *FR2* Gold |
|---|---|---|---|---|---|---|---|
| SCS CP point A | | Irrelevant to BWP | Within BWP | Within SL-FreqConfig | Within WP (BWP | WithinBWP (BWP further | Within BWP, PSSCHB |
| StartPRB | | INTEGER (0.. 2176) | | AbsoluteFrequency SSB-r16 SCS and SL BWP are the same | further includes symbols), PSSCH | includes symbols), PSSCH | (BWP further includes symbols) RB offset: determined based on the n CRC |
| Bandwidth | | 24:4:272 (PRB) | Csrs, $B_{SRS}$=0 | 11 RB within a bandwidth of the SL BWP index 0 in the S-SS/ PSBCH block is aligned with a subcarrier with index 0 in an RB of the SL BWP. | | | |
| CombSizeN | | N = {2, 4, 6, 12} | | 1 | density $\rho$ = 1==comb 12 7.4.1.5.3-1 | PSCCH, comb 4 PSSCH, comb2 Exact DMRS pattern? SCI indication sl-PSSCH-DMRS-TimePatternList | FreqDensity-SEQUENCE (SIZE (2)) OF INTEGER (1..276) according to Table 214 |
| Port | | Single port | | | 1 or 2 antenna port(s) | Same (same), PSCCH is fixed to one port, and PSSCH may be 1 or 2 ports. A mapping relationship between a number of ports and port numbers is fixed | |
| SL-ResourcePool | sl-TimeResource | / | | | | INTEGER (10..160) | |
| | sl-NumSubchannel | | | | | INTEGER (0..265) | |
| | sl-StartRB-Subchannel | | | | | INTEGER (1..27) | |

(continued)

| Signal feature | | R16 PRS (UE receives a signal) Gold | R16 SRS (UE transmits a signal) ZC | Sidelink SSB (transmit and receive) ZC | Sidelink CSI-RS (only unicast) | Sidelink DMRS (precoded) Gold | Sidelink PTRS (precoded) Only for *FR2* Gold |
|---|---|---|---|---|---|---|---|
| Set level | Maxnumofset | 2 | 16 | 3 sl-SSB-TimeAllocations | | | |
| | Periodicity | $2^{\mu}\{4, 8 \dots 20480\}$ | Period Semi-static Aperiodic | sl-NumSSB-WithinPeriod FR1, SCS = 15 1, 2 FR1, SCS = 30 1, 2, 4 FR1, SCS = 60 1, 2, 4, 8 FR2, SCS = 60 1, 2, 4, 8, 16, 32 FR2, SCS = 120 : 1, 2, 4, 8, 16, 32, 64 | | | TimeDensity-SEQUENCE (SIZE (3)) OF INTEGER (0..29) |
| | SFN0-Offset | us(Tx} synchronization problem) | / | TimeInterval (0..639) | | | |
| | ResourceSetSlotOffse | $T_{offset}^{PRS} \in \{0,1 \dots\dots T_{per}^{PRS}\}$ | | TimeOffsetSSB (0..1279) | | / | |
| | RepetitionFactor | $T_{rep}^{PRS} \in \{1, 2, 4, 6, 8, 16, 32\}$ | | / | | | |

(continued)

| Signal feature | | R16 PRS (UE receives a signal) Gold | R16 SRS (UE transmits a signal) ZC | Sidelink SSB (transmit and receive) ZC | Sidelink CSI-RS (only unicast) | Sidelink DMRS (precoded) Gold | Sidelink PTRS (precoded) Only for *FR2* Gold |
|---|---|---|---|---|---|---|---|
| | TimeGap | $T_{gap}^{PRS} \in \{1, 2, 4, 6, 8, 16, 32\}$ | | | | | |
| | MutingPattern | {2, 4, 8, 16, 32} | | | | | |
| | MutingBitRepetition Factor | {1, 2, 4, 8} | | | | | |
| | Power | | Alpa, | SL-RSRP-Range | PCSIRS | | |
| | | | po | | | | |
| | | | PathlossRS | | | | |
| | | | poweradjust | | | | |

EP 4 376 511 A1

(continued)

| Signal feature | | R16 PRS (UE receives a signal) Gold | R16 SRS (UE transmits a signal) ZC | Sidelink SSB (transmit and receive) ZC | Sidelink CSI-RS (only unicast) | Sidelink DMRS (precoded) Gold | Sidelink PTRS (precoded) Only for *FR2* Gold |
|---|---|---|---|---|---|---|---|
| resource level | SequenceId | {0, ... , 4095} objective, to distinguish cells | {0, ... , 65536} objective, to distinguish UEs | sl-SSID-r16 INTEGER (0..671) $N^{SL}_{ID,1} \in \{0,1, ... , 335\}$ $N^{SL}_{ID,2} \in \{0,1\}$ Obtain a time, indicating a time source | n ID is determined by the 10-bit LSB of CRC | PSCCH sl-DMRS-ScrambleID-r16 INTEGER (0..65535) PSSCH CRC | Nih equals the decimal representation of CRC on the PSCCH associated with the PSSCH |
| | Number of resources | 64 | 16 | | | | |
| | ReOffset | | RE&comb | 2, 3, ... , 127, 128 | | K is relative to subcarrier 0 in common resource block 0 PSCCH: k'=0,1, 2 | RE-Offset ENUMERAT ED {offset01, offset10, offset11} |
| | Slotoffset | {0, ... , 512} | / | | | | |
| | symbolOffset | {0, 1, 2, ... , 12} | 0-13 | PSS: 1, 2 Sss3,4 | | 8.4.1.1.2-1 2, 3, or 4 symbols Different combinations I is relative to PSCCH or PSSCH | |
| | NumSymbols | {2, 4, 6, 12} symbols | 124812 | | | | |
| | QCL-Info or sptial relation | | | | | | |
| | Period | / | Period & Offset | | | | |
| | Hopping | / | / | | | | |

| Signal feature | | R16 PRS (UE receives a signal) Gold | R16 SRS (UE transmits a signal) ZC | Sidelink SSB (transmit and receive) ZC | Sidelink CSI-RS (only unicast) | Sidelink DMRS (precoded) Gold | Sidelink PTRS (precoded) Only for *FR2* Gold |
|---|---|---|---|---|---|---|---|
| Measurement configuration | DL-PRS-expectedRSID | +/- 500 us ; Granularity : 4Ts | | | PC5 RRC configuration | | |
| | expectedRSTD-uncertainty | +/- 32 us FR2: +/- 8 us | | | | | |
| | DL-PRS-RstdReferenceInfo | ID | | | | | |
| | measurement gap | | / | | | | |
| | SENInitializationTime | / | | | | | |
| Measurement report | Timestamp | SFN,SLOI | | | | | |
| | TimingMeasQuality. Value | {0.1,... ,31} | | | | | |
| | TimingMeasQuality . Resolution | {0.1m, 1m, 10m, 30m} | | | | | |
| | RSTD\TOA or Relative pos | | | | | | |

EP 4 376 511 A1

The method and the apparatus provided in the embodiments of this application are described in detail below with reference to the accompanying drawings by using specific embodiments and application scenarios thereof.

It is to be noted that, the user equipment in this embodiment of this application may be a user equipment side device such as a mobile phone, a tablet personal computer (tablet personal computer), a laptop computer (laptop computer) or notebook computer, a personal digital assistant (personal digital assistant, PDA), a palmtop computer, a notebook, an ultra-mobile personal computer (ultra-mobile personal computer, UMPC), a Mobile Internet Device (mobile Internet device, MID), a wearable device (wearable device), a vehicle user equipment (VEHICLE USER EQUIPMENT, VUE), a pedestrian user equipment (pedestrian user equipment, PUE), or the like. The wearable device includes a bracelet, a headset, glasses, and the like. It is to be noted that, a specific type of the user equipment is not limited in the embodiments of this application.

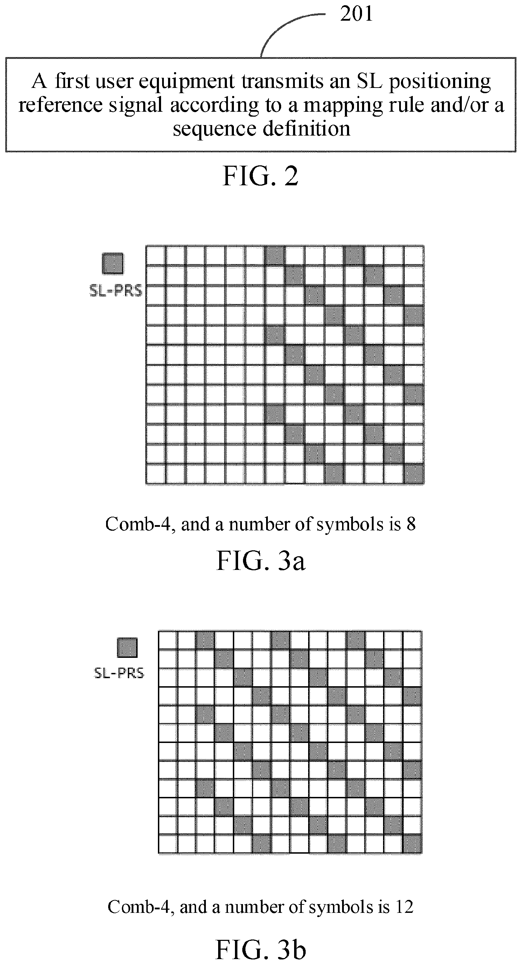

Referring to FIG. 2, an embodiment of this application provides a positioning method.

It is to be noted that, the embodiments of this application are applied to an SL communication scenario, and involved communication devices are a pair of user equipments in SL communication, that is, a first user equipment and a second user equipment. The first user equipment and the second user equipment may be a transmit end or a receive end of each other. In other words, the first user equipment may be a transmit user equipment, and the second user equipment may be a receive user equipment; or the first user equipment may be a receive user equipment, and the second user equipment may be a transmit user equipment. In another application scenario, a scheduling user equipment may further be configured in an SL communication system. Correspondingly, the first user equipment and the second user equipment may alternatively be a scheduling user equipment and a transmit user equipment respectively, or may be a scheduling user equipment and a receive user equipment respectively. Alternatively, a third user equipment is used as a scheduling user equipment that schedules the first user equipment and/or the second user equipment.

The method in the embodiments of this application is applicable to various situations mentioned above. Descriptions are given below by using a first user equipment as an execution entity of the method. It may be understood that, the first user equipment may be used as a transmit user equipment, a receive user equipment, or a scheduling user equipment in SL communication.

The method specifically includes step 201.

Step 201: A first user equipment transmits a sidelink SL positioning reference signal according to a mapping rule and/or a sequence definition.

In this embodiment of this application, the SL positioning reference signal (SL positioning reference signal, SL-PRS) is used for determining location information of the first user equipment and/or a second user equipment, where the second user equipment is an opposite user equipment that performs SL communication or SL positioning with the first user equipment.

As described in the foregoing application scenario, communication between the first user equipment and the second user equipment may be specifically as follows: 1) data transmission between the transmit user equipment and the receive user equipment; 2) information exchange between the scheduling user equipment and the transmit user equipment; and 3) information exchange between the scheduling user equipment and the receive user equipment. This is not specifically limited in this embodiment of this application.

It is to be noted that, the second user equipment may be one or more user equipments. For example, the first user equipment is used as a transmit user equipment, there may be a plurality of receive user equipments, and each user equipment may be used as a second user equipment. In another example, the first user equipment is used as a receive user equipment, there may be a plurality of transmit user equipments, and each user equipment may be used as a second user equipment.

The mapping rule is used for determining a mapping configuration of the SL positioning reference signal, and the sequence definition is used for determining a sequence feature and/or a pattern of the SL positioning reference signal, so that the first user equipment can send the SL positioning reference signal to the opposite user equipment according to the mapping rule and/or the sequence definition, and the first user equipment can receive the SL positioning reference signal from the opposite user equipment according to the mapping rule and/or the sequence definition.

It is to be noted that, the mapping rule described in this application may be determining the SL positioning reference signal according to a protocol constraint, or may be determining the SL positioning reference signal according to configuration information (for example, a network side sends the configuration information to the first user equipment, a higher layer sends the configuration information to the first user equipment or the second user equipment, or a higher layer sends the configuration information to the first user equipment), or may be determining the SL positioning reference signal in combination with a protocol and configuration information.

In this embodiment of this application, by using the mapping rule for determining the mapping configuration of the SL positioning reference signal and the sequence definition for determining the sequence feature and/or the pattern of the SL positioning reference signal, transmission of the SL positioning reference signal between the first user equipment and the second user equipment is implemented or determined, and positioning requirements in SL communication are met.

In a possible implementation, the SL positioning reference signal includes one or more of the following:

(1) Group SL positioning reference signal, where the SL positioning reference signal is used for one or more groups (groups), the group SL positioning reference signal of the one or more groups meets a preset rule, the preset rule may be that group identities (identities, IDs) are consistent (where in an embodiment, a positioning server or application service determines a same ID for a same service, and the ID may be a group ID; alternatively, a plurality of vehicles may form a fleet, and vehicles in predetermined fleets may have a same group ID), or group SL positioning reference signals are the same. Content of the preset rule is not specifically limited in this embodiment of this application.

(2) Zone SL positioning reference signal, where the SL positioning reference signal is used for one or more zones, and the one or more zones are zones that can parse the zone SL positioning reference signal.

Further, the zone may be determined in the following manners:

(a) determining through a network side configuration, for example, assigning a zone ID (zone ID);
(b) determining according to a signal coverage range, for example, a range of receiving a hybrid automatic repeat request (hybrid automatic repeat request, HARQ), and the like; and
(c) determining according to a preset range, for example, a diameter of 100 m, and the like.

(3) UE-specific SL positioning reference signal, where the SL positioning reference signal is used for a specific user equipment.

Further, the UE-specific SL positioning reference signal may be determined in the following manners:

(a) assigning an ID of the UE-specific SL positioning reference signal through a network side;
(b) using an ID of an SL positioning reference signal selected by a UE according to a specific rule;
(c) using a scrambling-code ID;
(d) using cyclic redundancy check (cyclic redundancy check, CRC) code; and
(e) using a combination of the foregoing IDs and another ID, where the another ID may be a group ID, a cell ID, a sidelink synchronization signal block (sidelink synchronization signal block, S-SS block) ID, and/or a physical sidelink broadcast channel block (physical sidelink broadcast channel block, PSBCH block) ID (for example, (scrambling-code ID+cell ID) mode1024).

(4) Cell, transmission and reception point (transmission and reception point, TRP) TRP, or road side unit (road side unit, RSU) RSU specific SL positioning reference signal, where the SL positioning reference signal is associated with a geographical location, and one geographical location is associated with one or more SL positioning reference signals.

In a possible implementation, the SL positioning reference signal and a UU positioning reference signal have partially same mapping rules and/or sequence definitions or completely same mapping rules and/or sequence definitions.

The UU positioning reference signal may include an LTE-positioning reference signal (LTE-PRS), an NR PRS, an NR SRS, and the like.

In this embodiment of this application, the SL positioning reference signal may be partially or completely the same as the UU positioning reference signal. In a case that the SL positioning reference signal is completely the same as the UU positioning reference signal, for example, for some special scenarios, content of the SL positioning reference signal is consistent with content of the UU positioning reference signal, the UU positioning reference signal may be directly reused as the SL positioning reference signal. In a case that the SL positioning reference signal is partially the same as the UU positioning reference signal, for example, bands in communication scenarios of the two are different, the content of the SL positioning reference signal is inconsistent with the content of the UU positioning reference signal, and the UU positioning reference signal cannot be reused as the SL positioning reference signal. In another example, the SL positioning reference signal may carry an automatic gain control (automatic gain control, AGC) character, where the character does not exist in the UU positioning reference signal, and in this case, the content of the SL positioning reference signal is inconsistent with the content of the UU positioning reference signal, and the UU positioning reference signal cannot be reused as the SL positioning reference signal.

As described above, in an embodiment, the SRS may be used as the SL positioning reference signal. In another example, the SL positioning reference signal may be received by a network side device.

In another embodiment, the SL-PRS and the UU positioning reference signal may use a same band, a numerology time-frequency resource configuration, or the like.

In another embodiment, the SL-PRS and the UU positioning reference signal may use a same sequence definition, for example, an ID, a sequence type, a sequence initial value cinit, and the like.

In a possible implementation, there may be a plurality of SL positioning reference signals, for example, a plurality of SL positioning reference signals of a first device, or a first device is scheduled to send a plurality of SL positioning reference signals or is scheduled to receive a plurality of SL positioning reference signals, where the plurality of SL positioning reference signals may be the same or different.

In a case that there are a plurality of SL positioning reference signals, and the plurality of SL positioning reference signals have partially same mapping rules and/or sequence definitions or completely same mapping rules and/or sequence definitions, the method further includes any one of the following:

(1) sending or measuring, by the first user equipment, the plurality of SL positioning reference signals according to first indication information.
The first indication information may be configured by the network side, or may be configured by the first user equipment, the second user equipment, or another scheduling user equipment, or may be configured by a higher layer of the first user equipment, for example, a long term evolution positioning protocol (long term evolution positioning protocol, LPP) layer or a PC5-RRC layer. A specific implementation is as follows:

(a) configuring by the network side by using a time frequency, so that the plurality of SL positioning reference signals may be sent at different time frequencies, for example, only transmission symbols are the same, but frequency-domain resource elements (resource elements, REs) are different, for example, RE start locations are different; and
(b) configuring by the first user equipment or the second user equipment, or another scheduling user equipment, or the higher layer of the first user equipment (where optionally, the first user equipment is a scheduling user equipment) by using a time frequency, so that the plurality of SL positioning reference signals may be sent at different time frequencies, for example, only transmission symbols are the same, but frequency-domain REs are different.

(2) The first user equipment expects no sending or measurement on the SL positioning reference signal. In an embodiment, the first user equipment is scheduled to simultaneously send/measure a plurality of SL positioning reference signals, and the first user equipment does not send/measure any SL positioning reference signal.
(3) The first user equipment determines, according to a priority rule, to send or measure the SL positioning reference signal.

In a possible implementation, in a case that there are a plurality of SL positioning reference signals, the first user equipment sends/measures one or N SL positioning reference signals with a high priority.

In a possible implementation, in a case that there are a plurality of SL positioning reference signals, the plurality of SL positioning reference signals have a same target user equipment, where the target user equipment may be a transmit user equipment or a receive user equipment. When the first user equipment is the transmit user equipment, and the target user equipment is the second user equipment, the target user equipment is the receive user equipment. Alternatively, the first device is the target user equipment, and the first device is configured to send or measure the plurality of SL positioning reference signals. For example, a plurality of first user equipments may send the plurality of SL positioning reference signals to the target user equipment. In another example, when the first user equipment is the receive user equipment, to be specific, the target user equipment may send the plurality of SL positioning reference signals to a plurality of first user equipments.

In a case that the first user equipment is the transmit user equipment, and the second user equipment is the target user equipment, that is, the target user equipment is the receive user equipment, the target user equipment has one or more the following operations:

(1) measuring one SL positioning reference signal;
(2) measuring A1 SL positioning reference signals according to a capability, where A1 is not greater than the capability; and
(3) measuring A2 SL positioning reference signals according to a priority, where A1 corresponds to the priority.

It is to be noted that, the first user equipment may learn, in an existing manner, whether the target user equipment has the foregoing operations. For example, the target user equipment may generate some feedback information in the existing manner after performing a measurement operation, and the first user equipment may learn, according to the feedback information, whether the target user equipment has the foregoing operations.

In a case that the first user equipment is the receive user equipment, and the second user equipment is the target user equipment, that is, the target user equipment is the transmit user equipment, the target user equipment has one or more the following operations:

(1) sending one SL positioning reference signal;

(2) sending A1 SL positioning reference signals according to a capability, where A1 is not greater than the capability; and

(3) sending A2 SL positioning reference signals according to a priority, where A1 corresponds to the priority.

In a possible implementation, in a case that there are a plurality of SL positioning reference signals, and the plurality of SL positioning reference signals are from different carriers (carriers) or frequency layers (frequency layers),

if the first user equipment is a receive user equipment, the method further includes any one of the following:

(1) measuring, by the first user equipment, SL positioning reference signals on one carrier or frequency layer;

(2) measuring, by the first user equipment, SL positioning reference signals on B 1 carriers or frequency layers according to a capability, where B 1 is not greater than the capability; and

(3) measuring, by the first user equipment, SL positioning reference signals on B2 carriers or frequency layers according to a priority, where B2 corresponds to the priority; and

if the first user equipment is a transmit user equipment, the method further includes any one of the following:

(1) sending, by the first user equipment, SL positioning reference signals on one carrier or frequency layer;

(2) sending, by the first user equipment, SL positioning reference signals on B 1 carriers or frequency layers according to a capability, where B 1 is not greater than the capability; and

(3) sending, by the first user equipment, SL positioning reference signals on B2 carriers or frequency layers according to a priority, where B2 corresponds to the priority.

In a possible implementation, the method further includes any one of the following:

(1) sending, by the first user equipment, the SL positioning reference signal;

(2) expecting, by the first user equipment, no sending or measurement on the SL positioning reference signal;

(3) expecting, by the first user equipment, no sending or measurement on the plurality of SL positioning reference signals;

(4) expecting, by the first user equipment, no sending or measurement on SL positioning reference signals on a plurality of carriers or frequency layers; and

(5) determining, by the first user equipment according to a priority rule, to send or measure the SL positioning reference signal and/or the UU positioning reference signal.

In a possible implementation, the method further includes:

receiving, by the first user equipment, second indication information, where the second indication information is used for indicating that the first user equipment sends or measures the SL positioning reference signal; and

the second indication information may be indication information sent by the network side, and correspondingly, the second indication information may indicate the following content:

(a) indicating sending or measurement of the UU positioning reference signal or the SL positioning reference signal, where the second indication information includes configuration information of the SL positioning reference signal;

(b) indicating sending or measurement of the plurality of SL positioning reference signals, where the second indication information includes configuration information of the SL positioning reference signals; and

(c) indicating sending or measurement of SL positioning reference signals of a plurality of carriers, where the second indication information includes configuration information of the SL positioning reference signals.

The second indication information may be indication information sent by the scheduling user equipment or the second user equipment, or may be indication information sent by the higher layer of the first user equipment. Correspondingly, the second indication information may indicate the following content:

(a) indicating sending or measurement of the UU positioning reference signal or the SL positioning reference signal, where the second indication information includes configuration information of the SL positioning reference signal;

(b) indicating sending or measurement of the plurality of SL positioning reference signals, where the second indication information includes configuration information of the SL positioning reference signals; and

(c) indicating sending or measurement of SL positioning reference signals of a plurality of carriers, where the second indication information includes configuration information of the SL positioning reference signals.

It may be understood that, the second indication information indicates sending or measurement of a positioning reference signal. To be specific, when the first user equipment is used as the transmit user equipment, the second indication information indicates sending of the positioning reference signal; and when the first user equipment is used as the receive user equipment, the second indication information indicates measurement of the positioning reference signal.

Alternatively, the method further includes: sending, by the first user equipment, second indication information to the second user equipment, where the second indication information is used for indicating that the second user equipment sends or measures the SL positioning reference signal. Similarly, when the second user equipment is used as the transmit user equipment, the second indication information indicates sending of the positioning reference signal; and when the second user equipment is used as the receive user equipment, the second indication information indicates measurement of the positioning reference signal.

In a possible implementation, the mapping rule includes a first time-domain mapping rule; and
the first time-domain mapping rule includes one or more of the following:

(1) a number of orthogonal frequency division multiplexing (OFDM) symbols of the SL positioning reference signal, for example, LN symbols;
(2) a maximum number of OFDM symbols of the SL positioning reference signal, for example, 1, 6, 11, 12, or 13; and
(3) the first OFDM symbol of the SL positioning reference signal is located on an $X^{th}$ symbol in a slot, X being a positive integer. For example, a first OFDM symbol in an S-SS/PSBCH block is a first OFDM symbol in a slot. In another example, OFDM symbols of the SL positioning reference signal are continuous (for example, from an $X^{th}$ symbol to an $X+M-1(X+LN-1)^{th}$ symbol of the SL positioning reference signal).

In a possible implementation, the mapping rule includes a second time-domain mapping rule; and

the second time-domain mapping rule includes one or more of the following:

(1) continuously sending the SL positioning reference signal on OFDM symbols at locations expect a first location;
(2) sending the SL positioning reference signal on an OFDM symbol at a location after the first location;
(3) sending the SL positioning reference signal on an OFDM symbol at a location other than the first location;
(4) skipping sending the SL positioning reference signal on an OFDM symbol corresponding to the first location; and
(5) reusing the SL positioning reference signal at a second location, or punching the SL positioning reference signal at a second location, where

the first location includes one or more of the following:

(a) time-domain locations of S-SS blocks and/or PSBCH blocks, or time-frequency locations of S-SS blocks and/or PSBCH blocks, for example, from an $X^{th}$ symbol to an $(X+M-1)^{th}$ symbol of the SL positioning reference signal;
(b) time-domain locations of a primary synchronization signal (primary synchronization signal, PSS), a secondary synchronization signal (secondary synchronization signal, SSS), and/or a physical broadcast synchronization channel (physical broadcast synchronization channel, PBSCH), or time-frequency locations of a PSS, an SSS, and/or a PBSCH, for example, from the $X^{th}$ symbol to the $(X+M-1)^{th}$ symbol of the SL positioning reference signal;
(c) a time-domain location of second stage sidelink control information (sidelink control information, SCI) or a time-frequency location of second stage SCI, for example, from the $X^{th}$ symbol to the $(X+M-1)^{th}$ symbol of the SL positioning reference signal;
(d) time-domain locations of a channel-state information reference signal (channel-state information reference signal, CSI-RS) and/or a demodulation reference signal (demodulation reference signal, DMRS), or time-frequency locations of a CSI-RS and/or a DMRS, for example, from the $X^{th}$ symbol to the $(X+M-1)^{th}$ symbol of the SL positioning reference signal; and
(e) time-domain locations of AGC and/or a physical sidelink feedback channel (physical sidelink feedback channel, PSFCH), or time-frequency locations of AGC and/or a PSFCH.

Further, it may be understood that, if the foregoing first location exists on an OFDM on which the SL positioning reference signal sends a signal, for example, the first symbol sends a synchronization signal and physical broadcast channel block (synchronization signal and physical broadcast channel block, SSB), the SL positioning reference signal is not sent on the location, or is sent on the following first symbol that is not at the first location.

The second location includes one or more of the following:

(a) a location of a physical sidelink control channel (physical sidelink control channel, PSSCH);
(b) a location of SL data;
(c) a location of uplink (uplink, UL) data; and
(d) a location of a physical uplink shared channel (physical uplink shared channel, PUSCH).

In a possible implementation, the mapping rule includes a first pre-defined or pre-configured pattern (pattern), and the first pre-defined or pre-configured pattern includes a third time-domain mapping rule; and
the third time-domain mapping rule includes one or more of the following:

(1) a number of OFDM symbols of the SL positioning reference signal is fixed, for example, 1, 3, 6, or the like;
(2) a location L of an OFDM symbol of the SL positioning reference signal is fixed, L=0, 1, 3, or 7; and
(3) a location L0 of a start OFDM symbol of the SL positioning reference signal is fixed, for example, L0=0.

Optionally, when the slot is used for sending the S-SS/PSBCH, the location L0 of the start OFDM symbol of the SL positioning reference signal is fixed, for example, L0=0.

a) It is to be noted that, if the first symbol is used for sending the SL positioning reference signal, the second symbol is also used for sending the SL positioning reference signal and is repetition (repetition) of the first positioning reference signal.
b) It is to be noted that, if the AGC is used for sending the SL positioning reference signal, the first symbol after the AGC is also used for sending the SL positioning reference signal and is repetition of the first positioning reference signal.

Optionally, when the slot is not used for sending the S-SS/PSBCH, the location L0 of the start OFDM symbol of the SL positioning reference signal is fixed, for example, L0=0.

For example, the time-domain mapping rule is used for indicating how the SL positioning reference signal is mapped to a time domain, a symbol to which the SL positioning reference signal is mapped, symbols to which the SL positioning reference signal is mapped, symbols to which the SL positioning reference signal can be mapped, and symbols to which the SL positioning reference signal cannot be mapped.

In a possible implementation, the mapping rule includes that the first user equipment receives or sends third indication information, where

the third indication information is used for indicating that the SL positioning reference signal is transmitted on an SL subframe and/or a UL subframe, or the third indication information is used for indicating cross-band mapping, cross-carrier mapping, or cross-frequency-layer mapping, or the third indication information includes a number or locations of OFDM symbols.

That the third indication information is used for indicating cross-band mapping, cross-carrier mapping, or cross-frequency-layer mapping may be understood as that, whether the SL positioning reference signal may be at frequency bands and carriers with different indication information or activation BWPs, or may be understood as that, whether the SL positioning reference signal may be mapped on a plurality of frequency bands and carriers.

In a possible implementation, the mapping rule includes:
mapping the SL positioning reference signal to a UL subframe.

The mapping the SL positioning reference signal to a UL subframe may be understood as that, if the UL subframe may be used for an SL, and may be used for sending an SL positioning signal, or may be understood as that the UL subframe may be used for sending the SL positioning reference signal. Further, whether the SL positioning reference signal can be mapped to the UL subframe may be indicated by using the indication information.

In a possible implementation, the mapping rule includes a first power mapping rule; and
the first power mapping rule includes one or more of the following:

(1) the SL positioning reference signal is obtained by multiplying a first sequence by a first power coefficient;
(2) a transmit power of the SL positioning reference signal is less than a maximum predefined power, for example, 23 dbm;
(3) the transmit power of the SL positioning reference signal is a fixed value, for example, 18 dbm, and an SSB power is +3dbm, or the like; and
(4) the transmit power of the SL positioning reference signal is as follows:

$$P_{0,s-prs} + 10\log_{10}\left(2^{\mu} \cdot M_{RB}^{S-PRS}\right)\alpha_{s-prs} \cdot PL,$$

where

$P_{0,s-prs}$, $\alpha_{s-prs}$ is a power adjustment parameter of the SL positioning reference signal, $M_{RB}^{S-PRS}$ is a number of resource blocks (resource blocks, RBs) of the SL positioning reference signal, and PL is a path loss of a power reference signal, where the power reference signal includes one or more of the following:

(1) an SS block (SS block) and/or a physical broadcast channel (physical broadcast channel, PBCH block) corresponding to a master information block (mater information block, MIB);
(2) a reference signal RS used for determining a transmit power of a PUSCH scheduled by a DCI format 0_0;
(3) a predefined reference signal, for example, an SSB, a DL-PRS, or an SRS for a DL, S-SS/PSBCH blocks or an SL-PSSCH for an SL, or the like; and
(4) a reference signal RS used for a transmit power of a physical sidelink control channel (physical sidelink control channel, PSCCH), a PSSCH, or a PSFCH that is scheduled by a sidelink.

In a possible implementation, the mapping rule includes a first frequency-domain mapping rule; and
the first frequency-domain mapping rule includes one or more of the following:

(1) frequency-domain physical resource blocks (physical resource blocks, PRBs) of the SL positioning reference signal are continuous;
(2) a comb value of a comb structure of the SL positioning reference signal is the same as that of DMRS blocks, S-SS blocks, and/or PSBCH blocks;
(3) the SL positioning reference signal has a same numerology as the S-SS blocks and/or the PSBCH blocks, or the SL positioning reference signal has a same numerology as an SL bandwidth part (SL bandwidth part, SL BWP);
(4) the SL positioning reference signal has a same bandwidth as the SL BWP, the DMRS, and the PSSCH, or the SL positioning reference signal is in the SL BWP;
(5) the SL positioning reference signal has a same reference point (point A) as the SL BWP, the DMRS, and the PSSCH, or the SL positioning reference signal has a same point A as the S-SS blocks and/or the PSBCH blocks; and
(6) the SL positioning reference signal has a same subcarrier 0 as the SL BWP, the DMRS, and/or the PSSCH, or the SL positioning reference signal has the same point A as the S-SS blocks and/or the PSBCH blocks.

In a possible implementation, the mapping rule includes a second frequency-domain mapping rule; and

the second frequency-domain mapping rule includes one or more of the following:

(1) continuously sending the SL positioning reference signal on frequency-domain PRBs or REs at locations expect a third location, for example, sending the SL positioning reference signal from an $X^{th}$ symbol to an $(X+M-1)^{th}$ symbol;
(2) continuously sending the SL positioning reference signal on a frequency-domain PRB or RE at a location after the third location, for example, sending the SL positioning reference signal from the $X^{th}$ symbol to the $(X+M-1)^{th}$ symbol;
(3) sending the SL positioning reference signal on a frequency-domain PRB or RE at a location other than the third location, for example, sending the SL positioning reference signal from the $X^{th}$ symbol to the $(X+M-1)^{th}$ symbol;
(4) skipping sending the SL positioning reference signal on a PRB or an RE corresponding to the third location, for example, sending the SL positioning reference signal from the $X^{th}$ symbol to the $(X+M-1)^{th}$ symbol; and
(5) reusing the SL positioning reference signal at a fourth location, or punching the SL positioning reference signal at a fourth location, where

the third location includes one or more of the following:

(a) time-domain locations of S-SS blocks and/or PSBCH blocks, or time-frequency locations of S-SS blocks and/or PSBCH blocks;
(b) time-domain locations of a PSS, an SSS, and/or a PBSCH, or time-frequency locations of a PSS, an SSS, and/or a PBSCH;
(c) a time-domain location of second stage SCI or a time-frequency location of second stage SCI;
(d) time-domain locations of a CSI-RS and/or a DMRS, or time-frequency locations of a CSI-RS and/or a DMRS; and
(e) time-domain locations of AGC and/or a PSFCH, or time-frequency locations of AGC and/or a PSFCH.

Further, it may be understood that, if the foregoing third location exists on a frequency-domain PRB/RE on which the SL positioning reference signal sends a signal, for example, an SSB is sent on the first PRB/RE, the SL positioning reference signal is not sent on the location, or is sent on the following first frequency-domain location that is not at the first location.

The fourth location includes one or more of the following:

(a) a location of a PSSCH;
(b) a location of SL data;
(c) a location of UL data; and
(d) a location of a PUSCH.

For example, the frequency-domain mapping rule is used for indicating how the SL positioning reference signal is mapped to a frequency domain, PRBs or REs to which the SL positioning reference signal is mapped, a size of a bandwidth, frequency-domain locations to which the SL positioning reference signal can be mapped, and frequency-domain locations to which the SL positioning reference signal cannot be mapped.

In a possible implementation, the mapping rule includes a second stage SCI mapping rule; and the second stage SCI mapping rule includes one or more of the following:

(1) punching (punching), by second stage SCI, on the SL positioning reference signal, where optionally, when an RE of the PRS is less than a threshold, the second stage SCI performs punching on the SL positioning reference signal; and
(2) performing, by the second stage SCI, rate matching (rate matching) on the SL positioning reference signal, where optionally, when an RE of the PRS is greater than the threshold, the second stage SCI performs rate matching on the SL positioning reference signal.

In a possible implementation, the mapping rule includes a third frequency-domain mapping rule; and the third frequency-domain mapping rule includes one or more of the following:

(1) a number of frequency-domain PRBs of the SL positioning reference signal; and
(2) a comb value of the SL positioning reference signal;
(3) a numerology of the SL positioning reference signal;
(4) a bandwidth of the SL positioning reference signal;
(5) a point A of the SL positioning reference signal;
(6) a subcarrier 0 of the SL positioning reference signal; and
(7) determining the number of frequency-domain PRBs, the comb value, the numerology, the bandwidth, the point A, and/or the subcarrier 0 of the SL positioning reference signal according to a parameter of a pre-defined or pre-configured SL-frequencylayer, or a pre-configured SL-frequencylayer in first information, where the first information is configuration information obtained from a network side, the second user equipment, or a scheduling user equipment, that is, the first user equipment determines parameters in (1) to (6) according to a pre-defined or pre-configured SL-frequencylayer, or a pre-configured SL-frequencylayer in first information.

In a possible implementation, the method further includes:
determining the number of OFDM symbols, the maximum number of OFDM symbols, that the first OFDM symbol is located on the $X^{th}$ symbol in the slot, the first power coefficient, the point A, a number of frequency-domain PRBs, the bandwidth, the numerology, or the comb value in one or more of the following manners:

(1) determining by the first user equipment;
(2) determining by the first user equipment according to a protocol agreement or a preconfiguration;
(3) determining by the first user equipment according to first configuration information obtained from a network side; and
(4) determining by the first user equipment according to second configuration information sent by the second user equipment or the scheduling user equipment.

In a possible implementation, the sequence definition includes one or more of the following:

(1) a sequence of the SL positioning reference signal is a gold sequence, where the gold sequence is as follows:

$$r_l(m) = \frac{1}{\sqrt{2}}\big(1 - 2c(2m)\big) + j\frac{1}{\sqrt{2}}\big(1 - 2c(2m+1)\big),$$

where
$c(2m)$ is a value corresponding to a $(2m)^{th}$ location in $c(n)$, $c(n)$ is a pseudo-random sequence, and m is a positive integer;
(2) the sequence of the SL positioning reference signal is generated according to a ZC sequence and is as follows:

$$r^{(p_i)}(n, l') = r_{u,v}^{(\alpha_i, \delta)}(n) = e^{j\alpha n}\overline{r_{u,v}}(n),$$

where

$\overline{r_{u,v}}(n)$ is a ZC base sequence, u is a number of groups, v is a number of base sequences, and $\alpha$ is a cyclic shift;
$r^{(p_i)}(n,l')$ is an SRS sequence at a port $p_i$, n is a value of a frequency domain, and l' is a value of a time-domain symbol;
$r_{u,v}^{(\alpha_i, \delta)}(n)$ is a ZC sequence obtained by the base sequence according to a cyclic shift $\alpha i$ and a function $\delta$ (for example, $\delta = \log2(\text{comb value})$) of a comb structure;

(3) the sequence of the SL positioning reference signal is a Pi/2 binary phase shift keying (binary phase shift keying, BPSK) sequence; and
(4) the sequence of the SL positioning reference signal is a CGS sequence.

The sequence of an uplink positioning reference signal may be a gold sequence or a computer generate sequence (computer generate sequence, CGS) sequence, where generation parameters of the gold sequence or the CGS sequence may be calculated by using a UE/UE group ID or a network configuration ID. The UE/UE group ID may be calculated by using an international mobile subscriber identification number (international mobile subscriber identification number, IMSI) and an international mobile equipment identity (international mobile equipment identity, IMEI), or may be obtained through a network indication.
Then, $\pi/2$-BPSK modulation is performed, to generate a modulation sequence $d(i)$ of the uplink positioning reference signal,

$$d(i) = \frac{e^{j\frac{\pi}{2}(i\,mod\,2)}}{\sqrt{2}}\Big[\big(1 - 2b(i) + j\big(1 - 2b(i)\big)\big)\Big],$$

where
$b(i)$ is a sequence value obtained by gold code, and a modulation formula based on Pi/2 BPSK is mapped to $d(i)$ and is a corresponding time-domain sequence.
Then, discrete Fourier transform (discrete Fourier transform, DFT) is performed to obtain a frequency-domain sequence $z(i)$, and $z(i)$ is mapped to an OFDM resource grid.
The uplink positioning reference signal may be at least one of an NR SRS, an NR PRACH, an NR UL PRS, or an uplink positioning reference signal newly defined by NR.
In a possible implementation, an initial value $c_{init}$ of the $c(n)$ pseudo-random sequence is associated with one or more of the following:

(1) a cell identity (identity, ID) or a group ID;
(2) a destination (destination) ID, or a source (source) ID;
(3) cyclic redundancy check CRC corresponding to a physical sidelink control channel PSCCH;
(4) downlink synchronization signal identities IDs corresponding to S-SS blocks and/or PSBCH blocks;
(5) a scrambling-code identity of the SL positioning reference signal;

(6) a sequence ID or a group ID of the SL positioning reference signal;
(7) a port identity (port ID) of the SL positioning reference signal, or panel identification information (PANEL ID);
(8) a symbol of the sequence of the SL positioning reference signal; and
(9) a slot of the sequence of the SL positioning reference signal.

In a possible implementation, a sequence of the SL positioning reference signal is associated with one or more the following:

(1) carrying one or more pieces of user identification information, user group identification information, user time information, user time source information, scrambling information, and/or CRC information, for example, carrying environmental information, beacon (beacon) ID, floor information, and the like;
(2) carrying one or more cyclic shifts, cyclic shift pairs, and/or cyclic shift groups;
(3) carrying transmission occasion information of the SL positioning reference signal, for example, a subframe, a symbol, a frame number, a utc, resources available for an SL, and an SL logical resource;
(4) carrying a transmission channel, a transmission resource, a corresponding resource pool, and/or information related to a corresponding BWP of one or more SL positioning reference signals;
(5) carrying resource identification of the sequence or resource set identity ID information of the sequence; and
(6) carrying geographical location information, where the geographical location information may include information about a latitude and a longitude, and an altitude.

In a possible embodiment, the initial value of c(n) of the SL positioning reference signal is associated with one or more of (1) to (6).

In a possible implementation, the initial value of c(n) is one or more of the following:

$$c_{init} = \left(2^{10}\left(N_{symb}^{slot}n_{s,f}^{\mu} + l + 1\right)(2n_{ID} + 1) + n_{ID}\right) \bmod 2^{31};$$

$$c_{init} = \left(2^{17}\left(N_{symb}^{slot}n_{s,f}^{\mu} + l + 1\right)(2N_{ID} + 1) + 2N_{ID}\right) \bmod 2^{31},$$

$$N_{ID} \in$$

$$\{0, 1, \dots, 65535\};$$

and

$$c_{init} = \left(2^{22}\left\lfloor\frac{n_{ID,seq}^{PRS}}{1024}\right\rfloor + 2^{10}\left(N_{symb}^{slot}n_{s,f}^{\mu} + l + 1\right)\left(2\left(n_{ID,seq}^{PRS} \bmod 1024\right) + 1\right) + \left(n_{ID,seq}^{PRS} \bmod 1024\right)\right) \bmod 2^{31},$$

$N_{symb}^{slot}$ is a number of symbols in a corresponding SL slot, $n_{s,f}^{\mu}$ is the slot of the sequence of the SL positioning reference signal, l is a symbol of the sequence of the SL positioning reference signal, and $n_{ID,seq}^{PRS}$ is identification information of the sequence of the SL positioning reference signal and is related to at least one of the following:

(1) a cell ID or a group ID;
(2) a destination (destination) ID, or a source (source) ID;
(3) cyclic redundancy check CRC corresponding to a physical sidelink control channel PSCCH;
(4) downlink synchronization signal identities IDs corresponding to S-SS blocks and/or PSBCH blocks;
(5) a scrambling-code identity of the SL positioning reference signal;
(6) a sequence ID or a group ID of the SL positioning reference signal;

(7) a port identity (port ID) of the SL positioning reference signal, or panel identification information (PANEL ID);

(8) carrying one or more pieces of user identification information, user group identification information, user time information, user time source information, scrambling information, and/or CRC information, for example, carrying environmental information, beacon (beacon) ID, floor information, and the like;

(9) carrying one or more cyclic shifts, cyclic shift pairs, and/or cyclic shift groups;

(10) carrying geographical location information, where the geographical location information may include information about a latitude and a longitude, and an altitude; and

(11) a zone ID.

In a possible implementation, the mapping rule further includes: mapping the SL positioning reference signal to a first dedicated resource.

In a possible implementation, the method further includes:

transmitting, by the first user equipment, first dedicated resource configuration information, for example, the first user equipment receives first dedicated resource configuration information or sends first dedicated resource configuration information.

Specifically, in an embodiment, as a scheduling user equipment and a transmit user equipment, or a relay device, the first user equipment may send the first dedicated resource configuration information; and in another embodiment, as a scheduling user equipment, a transmit user equipment, a receive user equipment, the first user equipment may receive the first dedicated resource configuration information.

The first dedicated resource configuration information includes one or more the following:

(1) bandwidth information of the first dedicated resource;

(2) point A and startRB information of the first dedicated resource;

(3) numerology information of the first dedicated resource;

(4) a start time point of the first dedicated resource;

(5) an end time point of the first dedicated resource;

(6) a duration of the first dedicated resource; and

(7) first dedicated resource pool information.

In a possible implementation, the method further includes:

in a case that the first user equipment is scheduled to send the SL positioning reference signal, detecting an RSRP on a first dedicated resource pool and listening to SCI, and determining a transmit resource of the SL positioning reference signal.

The SL positioning reference signal is sent in a case that the first user equipment is scheduled by the higher layer, or the network side, or the second user equipment to send the SL positioning reference signal.

Case 1: There is a dedicated resource pool or a resource whose RSRP is less than a threshold 1.

Case 2: It is not detected through listening that a dedicated resource pool or a resource is scheduled by the SCI.

Case 3: There is a reservation resource pool of a dedicated resource pool whose RSRP is less than a threshold 1. Optionally, the reservation resource pool of the dedicated resource pool may be resources reserved for the network side to configure SL positioning reference signal transmission.

In a possible implementation, transmit resources or transmit sequences of SL positioning reference signals corresponding to different first user equipments meet one or more of the following:

(1) an SL positioning reference signal ID unique to the first user equipment is configured (where $c(n)$ is an initial value of a pseudo-random sequence); and

(2) mapping rules or sequence definitions used by the different first user equipments to send the SL positioning reference signals are different.

In a possible implementation, an ID hopping (hopping) rule associated with the initial value of the $c(n)$ pseudo-random sequence is associated with one or more of geographical location information, the source ID, the destination ID, a zone ID, or a communication range.

The following describes technical solutions of this application with reference to specific embodiments.

1. Pattern (pattern) feature

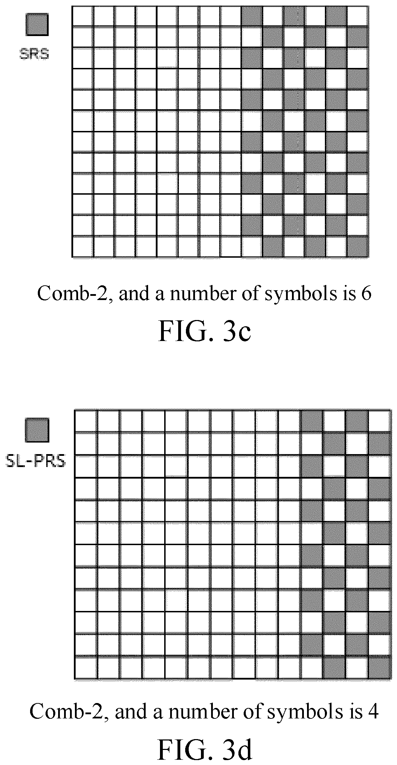

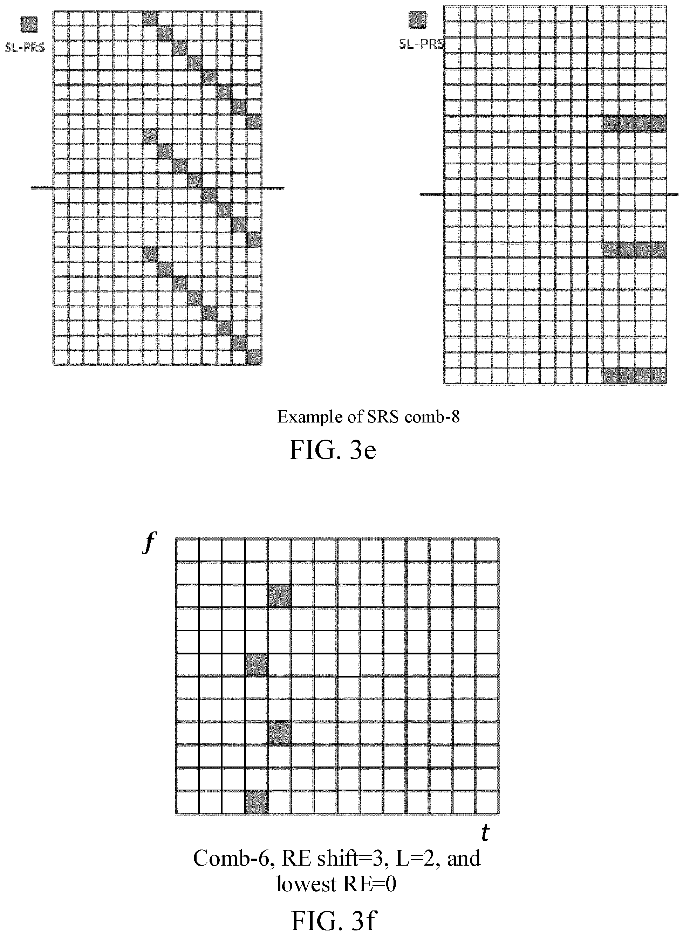

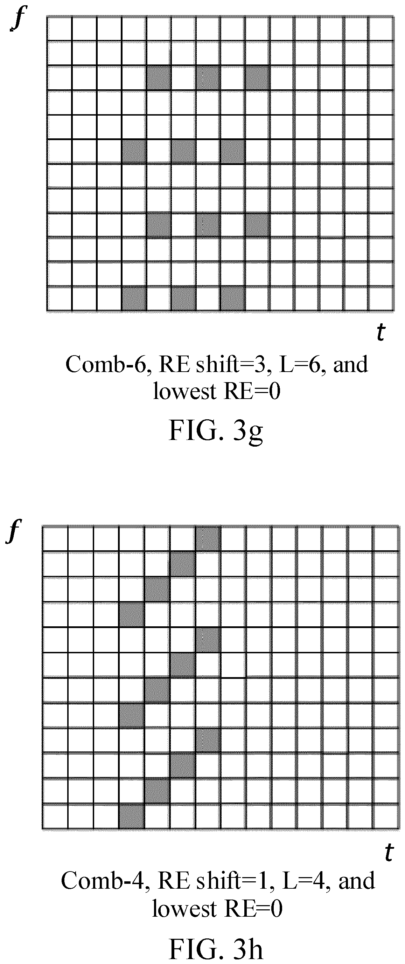

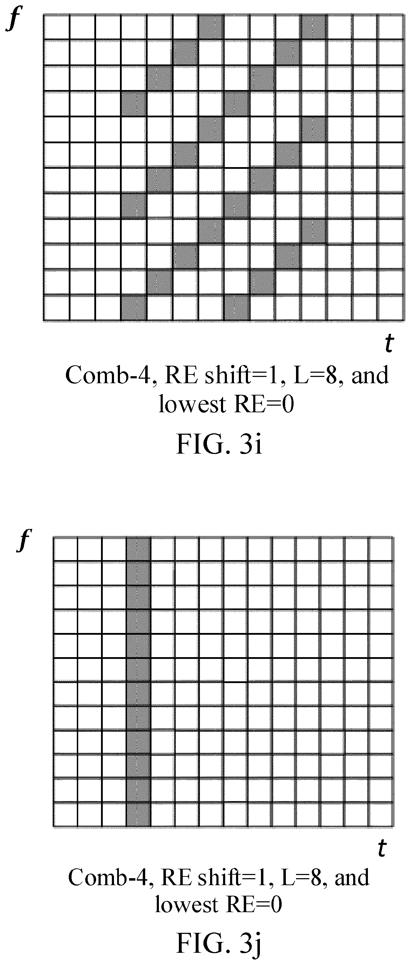

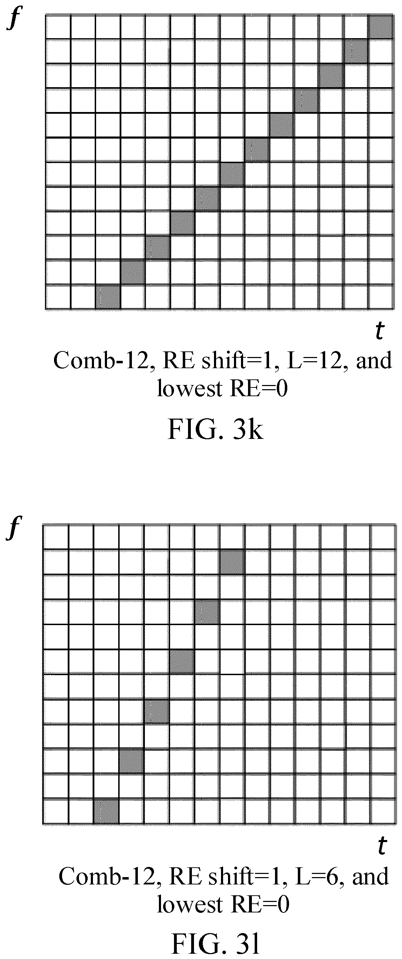

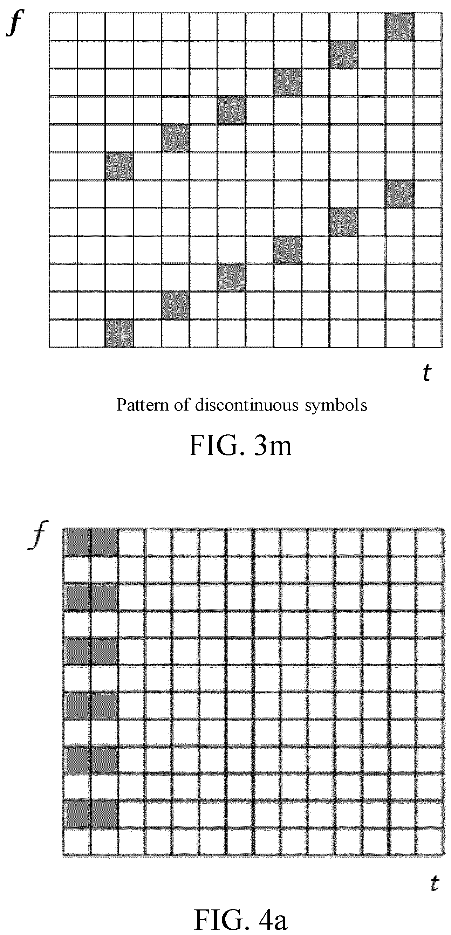

FIG. 3a to FIG. 3m show patterns patterns of SL positioning reference signals.

It is to be noted that, the illustrations are only some possible patterns, a symbol location may be adjusted, and an RE start location may also be adjusted.

In an implementation, a target pattern feature corresponding to a target pattern has a correspondence with at least one of the following: a density corresponding to the SL positioning reference signal, a CDM type, a port number, a Comb value, a number of symbols, an RE offset, an SL symbol type, a symbol location, a bandwidth, a positioning requirement, a sequence feature, a transmission channel, a transmission resource, a resource pool, and a BWP.

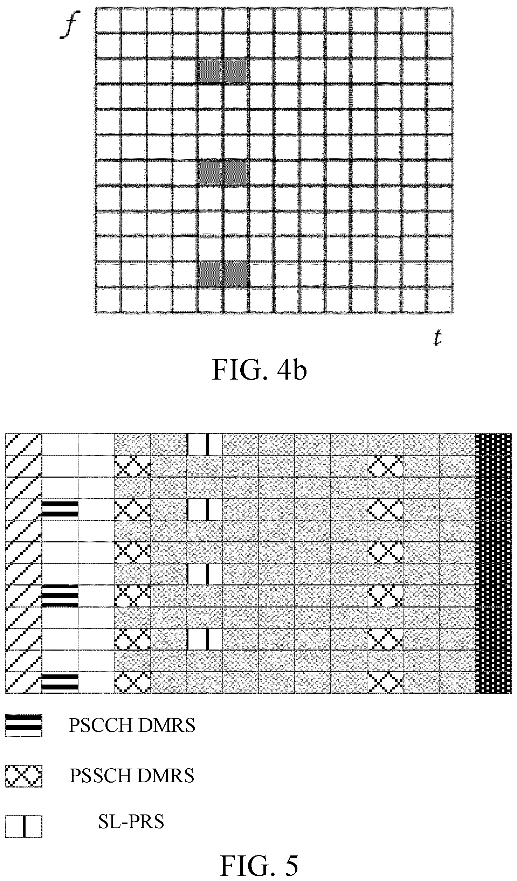

2. Pattern (pattern) feature, where there are two symbols used for an SL-PRS, and the second symbol is repetition of the first symbol, as shown in FIG. 4a and FIG. 4b.

In another implementation, as shown in FIG. 5, the SL-PRS avoids symbols such as the S-SS/PBSCH/DMRS and is transmitted on another symbol.

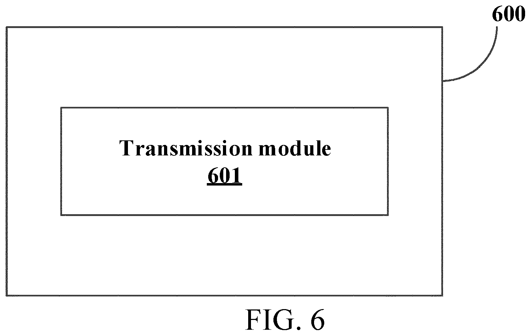

Referring to FIG. 6, an embodiment of this application provides a positioning apparatus 600, used in a user equipment. The apparatus 600 includes:

a transmission module 601, configured to transmit, by a first user equipment, an SL positioning reference signal according to a mapping rule and/or a sequence definition, where

the mapping rule is used for determining a mapping configuration of the SL positioning reference signal, the sequence definition is used for determining a sequence feature and/or a pattern of the SL positioning reference signal, the SL positioning reference signal is used for determining location information of the first user equipment and/or a second user equipment, and the second user equipment is an opposite user equipment that performs SL communication or SL positioning with the first user equipment.

In a possible implementation, the SL positioning reference signal includes one or more of the following:

a group SL positioning reference signal, where the SL positioning reference signal is used for one or more groups;

a zone SL positioning reference signal, where the SL positioning reference signal is used for one or more zones;

a UE-specific SL positioning reference signal, where the SL positioning reference signal is used for a specific user equipment; and

a cell, TRP, or RSU specific SL positioning reference signal, where the SL positioning reference signal is associated with a geographical location, and one geographical location is associated with one or more SL positioning reference signals.

In a possible implementation, the SL positioning reference signal and a UU positioning reference signal have partially same mapping rules and/or sequence definitions or completely same mapping rules and/or sequence definitions.

In a possible implementation, in a case that there are a plurality of SL positioning reference signals, and the plurality of SL positioning reference signals have partially same mapping rules and/or sequence definitions or completely same mapping rules and/or sequence definitions, the method further includes any one of the following:

sending or measuring, by the first user equipment, the plurality of SL positioning reference signals according to first indication information;

expecting, by the first user equipment, no sending or measurement on the SL positioning reference signals; and

determining, by the first user equipment according to a priority rule, to send or measure the SL positioning reference signals.

In a possible implementation, in a case that there are a plurality of SL positioning reference signals, and the plurality of SL positioning reference signals have a same target user equipment,

if the first user equipment is a transmit user equipment, the target user equipment has one or more of the following operations:

measuring one SL positioning reference signal;

measuring A1 SL positioning reference signals according to a capability, where A1 is not greater than the capability; and

measuring A2 SL positioning reference signals according to a priority, where A1 corresponds to the priority; and

if the first user equipment is a receive user equipment, the target user equipment has one or more of the following operations:

sending one SL positioning reference signal;

sending A1 SL positioning reference signals according to a capability, where A1 is not greater than the capability; and

sending A2 SL positioning reference signals according to a priority, where A1 corresponds to the priority.

In a possible implementation, in a case that there are a plurality of SL positioning reference signals, and the plurality of SL positioning reference signals are from different carriers or frequency layers,
if the first user equipment is a receive user equipment, the transmission module is further configured to perform any one of the following:

measuring, by the first user equipment, SL positioning reference signals on one carrier or frequency layer;
measuring, by the first user equipment, SL positioning reference signals on B 1 carriers or frequency layers according to a capability, where B 1 is not greater than the capability; and
measuring, by the first user equipment, SL positioning reference signals on B2 carriers or frequency layers according to a priority, where B2 corresponds to the priority; and
if the first user equipment is a transmit user equipment, the transmission module is further configured to perform any one of the following:

sending, by the first user equipment, SL positioning reference signals on one carrier or frequency layer;
sending, by the first user equipment, SL positioning reference signals on B 1 carriers or frequency layers according to a capability, where B 1 is not greater than the capability; and
sending, by the first user equipment, SL positioning reference signals on B2 carriers or frequency layers according to a priority, where B2 corresponds to the priority.

In a possible implementation, the transmission module is further configured to perform any one of the following:

sending, by the first user equipment, the SL positioning reference signal;
expecting, by the first user equipment, no sending or measurement on the SL positioning reference signal;
expecting, by the first user equipment, no sending or measurement on the plurality of SL positioning reference signals;
expecting, by the first user equipment, no sending or measurement on SL positioning reference signals on a plurality of carriers or frequency layers; and
determining, by the first user equipment according to a priority rule, to send or measure the SL positioning reference signal and/or the UU positioning reference signal.

In a possible implementation, the transmission module is further configured to:

receiving, by the first user equipment, second indication information, where the second indication information is used for instructing the first user equipment to send or measure the SL positioning reference signal, and the second indication information is indication information sent by a network side, or the second indication information is indication information sent by a scheduling user equipment, or the second indication information is indication information sent by a higher layer of the first user equipment; or
sending, by the first user equipment, second indication information, where the second indication information is used for indicating that the second user equipment sends or measures the SL positioning reference signal.

In a possible implementation, the mapping rule includes a first time-domain mapping rule; and
the first time-domain mapping rule includes one or more of the following:

a number of orthogonal frequency division multiplexing OFDM symbols of the SL positioning reference signal;
a maximum number of OFDM symbols of the SL positioning reference signal; and
the first OFDM symbol of the SL positioning reference signal is located on an $X^{th}$ symbol in a slot, X being a positive integer.

In a possible implementation, the mapping rule includes a second time-domain mapping rule; and
the second time-domain mapping rule includes one or more of the following:

continuously sending the SL positioning reference signal on OFDM symbols at locations expect a first location;
sending the SL positioning reference signal on an OFDM symbol at a location after the first location;
sending the SL positioning reference signal on an OFDM symbol at a location other than the first location;
skipping sending the SL positioning reference signal on an OFDM symbol corresponding to the first location; and
reusing the SL positioning reference signal at a second location, or punching the SL positioning reference signal at a second location, where
the first location includes one or more of the following:

time-domain locations of sidelink synchronization signal blocks S-SS blocks and/or physical sidelink broadcast channel blocks PSBCH blocks, or time-frequency locations of S-SS blocks and/or PSBCH blocks;

time-domain locations of a primary synchronization signal PSS, a secondary synchronization signal SSS, and/or a physical broadcast synchronization channel PBSCH, or time-frequency locations of a PSS, an SSS, and/or a PBSCH;

a time-domain location of second stage sidelink control information SCI or a time-frequency location of second stage SCI;

time-domain locations of a channel-state information reference signal CSI-RS and/or a demodulation reference signal DMRS, or time-frequency locations of a CSI-RS and/or a DMRS; and

time-domain locations of automatic gain control AGC and/or a physical sidelink feedback channel PSFCH, or time-frequency locations of AGC and/or a PSFCH; and

the second location includes one or more of the following:

a location of a physical sidelink control channel PSSCH;
a location of SL data;
a location of uplink UL data; and
a location of a physical uplink shared channel PUSCH.

In a possible implementation, the mapping rule includes a third time-domain mapping rule; and the third time-domain mapping rule includes one or more of the following:

a number of OFDM symbols of the SL positioning reference signal is fixed;
a location of an OFDM symbol of the SL positioning reference signal is fixed; and
a location of a start OFDM symbol of the SL positioning reference signal is fixed.

In a possible implementation, the mapping rule includes that the first user equipment receives or sends third indication information, where

the third indication information is used for indicating that the SL positioning reference signal is transmitted on an SL subframe and/or a UL subframe, or the third indication information is used for indicating cross-band mapping, cross-carrier mapping, or cross-frequency-layer mapping, or the third indication information includes a number or locations of OFDM symbols.

In a possible implementation, the mapping rule includes:
mapping the SL positioning reference signal to a UL subframe.

In a possible implementation, the mapping rule includes a first power mapping rule; and the first power mapping rule includes one or more of the following:

the SL positioning reference signal is obtained by multiplying a first sequence by a first power coefficient;
a transmit power of the SL positioning reference signal is less than a maximum predefined power;
the transmit power of the SL positioning reference signal is a fixed value; and
the transmit power of the SL positioning reference signal is as follows:

$$P_{0,s-prs} + 10\log_{10}\left(2^{\mu} \cdot M_{RB}^{S-PRS}\right)\alpha_{s-prs} \cdot PL,$$

where

$P_{0,s-prs}$, $\alpha_{s-prs}$ is a power adjustment parameter of the SL positioning reference signal, $M_{RB}^{S-PRS}$ is a number of resource blocks RBs of the SL positioning reference signal, and PL is a path loss of a power reference signal, where the power reference signal includes one or more of the following:

a synchronization signal block SS block and/or a physical broadcast channel PBCH block corresponding to a master information block MIB;
an RS used for determining a transmit power of a PUSCH scheduled by a DCI format 0_0;
a predefined reference signal; and
an RS used for a transmit power of a PSCCH, a PSSCH, or a PSFCH scheduled by a sidelink.

In a possible implementation, the mapping rule includes a first frequency-domain mapping rule; and

the first frequency-domain mapping rule includes one or more of the following:

frequency-domain physical resource blocks PRBs of the SL positioning reference signal are continuous;
a comb value of a comb structure of the SL positioning reference signal is the same as that of DMRS blocks, S-SS blocks, and/or PSBCH blocks;
the SL positioning reference signal has a same numerology as the S-SS blocks and/or the PSBCH blocks, or the SL positioning reference signal has a same numerology as a sidelink bandwidth part SL BWP;
the SL positioning reference signal has a same bandwidth as the SL BWP, the DMRS, and the PSSCH, or the SL positioning reference signal is in the SL BWP;
the SL positioning reference signal has a same reference point point A as the SL BWP, the DMRS, and the PSSCH, or the SL positioning reference signal has a same point A as the S-SS blocks and/or the PSBCH blocks; and
the SL positioning reference signal has a same subcarrier 0 as the SL BWP, the DMRS, and/or the PSSCH, or the SL positioning reference signal has the same point A as the S-SS blocks and/or the PSBCH blocks.

In a possible implementation, the mapping rule includes a second frequency-domain mapping rule; and the second frequency-domain mapping rule includes one or more of the following:

continuously sending the SL positioning reference signal on frequency-domain PRBs or REs at locations expect a third location;
continuously sending the SL positioning reference signal on a frequency-domain PRB or RE at a location after the third location;
sending the SL positioning reference signal on a frequency-domain PRB or RE at a location other than the third location;
skipping sending the SL positioning reference signal on a PRB or an RE corresponding to the third location; and
reusing the SL positioning reference signal at a fourth location, or punching the SL positioning reference signal at a fourth location, where
the third location includes one or more of the following:

time-domain locations of S-SS blocks and/or PSBCH blocks, or time-frequency locations of S-SS blocks and/or PSBCH blocks;
time-domain locations of a PSS, an SSS, and/or a PBSCH, or time-frequency locations of a PSS, an SSS, and/or a PBSCH;
a time-domain location of second stage SCI or a time-frequency location of second stage SCI;
time-domain locations of a CSI-RS and/or a DMRS, or time-frequency locations of a CSI-RS and/or a DMRS; and
time-domain locations of AGC and/or a PSFCH, or time-frequency locations of AGC and/or a PSFCH; and
the fourth location includes one or more of the following:

a location of a PSSCH;
a location of SL data;
a location of UL data; and
a location of a PUSCH.

In a possible implementation, the mapping rule includes a second stage SCI mapping rule; and the second stage SCI mapping rule includes one or more of the following:

punching punching, by second stage SCI, on the SL positioning reference signal; and
performing, by the second stage SCI, rate matching rate matching on the SL positioning reference signal.

In a possible implementation, the mapping rule includes a third frequency-domain mapping rule; and the third frequency-domain mapping rule includes one or more of the following:

a number of frequency-domain PRBs of the SL positioning reference signal; and
a comb value of the SL positioning reference signal;
a numerology of the SL positioning reference signal;
a bandwidth of the SL positioning reference signal;
a point A of the SL positioning reference signal;
a subcarrier 0 of the SL positioning reference signal; and
determining the number of frequency-domain PRBs, the comb value, the numerology, the bandwidth, the point A, and/or the subcarrier 0 of the SL positioning reference signal according to a parameter of a pre-defined or pre-configured SL-frequencylayer, or a pre-configured SL-frequencylayer in first information, where the first information is configuration information obtained from a network side, the second user equipment, or a scheduling user equipment.

In a possible implementation, the transmission module is further configured to:
determining the number of OFDM symbols, the maximum number of OFDM symbols, that the first OFDM symbol is located on the $X^{th}$ symbol in the slot, the first power coefficient, the point A, a number of frequency-domain PRBs, the bandwidth, the numerology, or the comb value in one or more of the following manners:

determining by the first user equipment;
determining by the first user equipment according to a protocol agreement or a preconfiguration;
determining by the first user equipment according to first configuration information obtained from a network side; and
determining by the first user equipment according to second configuration information sent by the second user equipment or the scheduling user equipment.

In a possible implementation, the sequence definition includes one or more of the following:
a sequence of the SL positioning reference signal is a gold sequence, where the gold sequence is as follows:

$$r_l(m) = \frac{1}{\sqrt{2}}\big(1 - 2c(2m)\big) + j\frac{1}{\sqrt{2}}\big(1 - 2c(2m + 1)\big),$$

where

c(2m) is a value corresponding to a $(2m)^{th}$ location in c(n), c(n) is a pseudo-random sequence, and m is a positive integer;
the sequence of the SL positioning reference signal is a ZC sequence, and the ZC sequence is as follows:

$$r^{(p_i)}(n, l') = r_{u,v}^{(\alpha_i,\delta)}(n) = e^{j\alpha n}\overline{r_{u,v}}(n),$$

where

$\overline{r_{u,v}}(n)$ is a base sequence, u is a number of groups, v is a number of base sequences, and $\alpha$ is a cyclic shift;
$r^{(p_i)}(n,l')$ is a sounding reference signal SRS sequence at a port $p_i$, n is a value of a frequency domain, and l' is a value of a time-domain symbol;
$r_{u,v}^{(\alpha_i,\delta)}(n)$ is a ZC sequence obtained by the base sequence according to a cyclic shift $\alpha i$ and a function $\delta$ of a comb structure;
the sequence of the SL positioning reference signal is a Pi/2 binary phase shift keying BPSK sequence; and
the sequence of the SL positioning reference signal is a CGS sequence.

In a possible implementation, an initial value of the c(n) pseudo-random sequence is associated with one or more of the following:

a cell ID or a group ID;
a destination ID, or a source ID;
cyclic redundancy check CRC corresponding to a physical sidelink control channel PSCCH;
downlink synchronization signal identities IDs corresponding to S-SS blocks and/or PSBCH blocks;
a scrambling-code identity of the SL positioning reference signal;
a sequence ID or a group ID of the SL positioning reference signal;
a port identity port ID of the SL positioning reference signal, or panel identification information PANEL ID;
a symbol of the sequence of the SL positioning reference signal; and
a slot of the sequence of the SL positioning reference signal.

In a possible implementation, a sequence of the SL positioning reference signal is associated with one or more the following:

carrying one or more pieces of user identification information, user group identification information, user time information, user time source information, scrambling information, and/or CRC information;
carrying one or more cyclic shifts, cyclic shift pairs, and/or cyclic shift groups;
carrying transmission occasion information of the SL positioning reference signal;
carrying a transmission channel, a transmission resource, a corresponding resource pool, and/or information related to a corresponding BWP of one or more SL positioning reference signals;
carrying resource identification of the sequence or resource set identity ID information of the sequence; and
carrying geographical location information, where the geographical location information may include information about a latitude and a longitude, and an altitude.

In a possible implementation, the initial value of c(n) is one or more of the following:

$$c_{\text{init}} = \left(2^{10}\left(N_{\text{symb}}^{\text{slot}} n_{\text{s,f}}^{\mu} + l + 1\right)(2n_{\text{ID}} + 1) + n_{\text{ID}}\right) \bmod 2^{31};$$

$$c_{\text{init}} = \left(2^{17}\left(N_{\text{symb}}^{\text{slot}} n_{\text{s,f}}^{\mu} + l + 1\right)(2N_{\text{ID}} + 1) + 2N_{\text{ID}}\right) \bmod 2^{31},$$

$N_{\text{ID}} \in$

$$\{0,1,\dots,65535\};$$

and

$$c_{\text{init}} = \left(2^{22}\left\lfloor \frac{n_{\text{ID,seq}}^{\text{PRS}}}{1024} \right\rfloor + 2^{10}\left(N_{\text{symb}}^{\text{slot}} n_{\text{s,f}}^{\mu} + l + 1\right)\left(2\left(n_{\text{ID,seq}}^{\text{PRS}} \bmod 1024\right) + 1\right) + \left(n_{\text{ID,seq}}^{\text{PRS}} \bmod 1024\right)\right) \bmod 2^{31},$$

where

$N_{\text{symb}}^{\text{slot}}$ is a number of symbols in a corresponding SL slot, $n_{\text{s,f}}^{\mu}$ is the slot of the sequence of the SL positioning reference signal, $n_{\text{ID,seq}}^{\text{PRS}}$ is identification information of the sequence of the SL positioning reference signal, and l is a symbol of the sequence of the SL positioning reference signal.

In a possible implementation, the mapping rule further includes: mapping the SL positioning reference signal to a first dedicated resource.

In a possible implementation, the transmission module is further configured to:
transmit, by the first user equipment, first dedicated resource configuration information, where the first dedicated resource configuration information includes one or more of the following:

bandwidth information of the first dedicated resource;
point A and startRB information of the first dedicated resource;
numerology information of the first dedicated resource;
a start time point of the first dedicated resource;
an end time point of the first dedicated resource;
a duration of the first dedicated resource; and
first dedicated resource pool information.

In a possible implementation, the transmission module is further configured to:

in a case that the first user equipment is scheduled to send the SL positioning reference signal, detecting an RSRP on a first dedicated resource pool and listening to SCI, and determining a transmit resource of the SL positioning reference signal.

the SL positioning reference signal is sent in a case that there is a dedicated resource pool or a resource whose RSRP is less than a threshold 1, or it is not detected through listening that a dedicated resource pool or a resource is scheduled by the SCI, or there is a reservation resource pool of a dedicated resource pool whose RSRP is less than a threshold 1.

In a possible implementation, transmit resources or transmit sequences of SL positioning reference signals corresponding to different first user equipments meet one or more of the following:

an SL positioning reference signal ID unique to the first user equipment is configured; and
mapping rules or sequence definitions used by the different first user equipments to send the SL positioning reference signals are different.

It is to be noted that, mapping rules or sequence definitions used by the different first user equipments to send the SL positioning reference signals are different, including one or more the following:

mapping, by the identification information according to an ID of an SL positioning reference signal or a user equipment, SL positioning reference signals corresponding to different first user equipments to different time-domain mapping rules;
mapping, by the identification information according to an ID of an SL positioning reference signal or a user equipment, SL positioning reference signals corresponding to different first user equipments to different frequency-domain mapping rules;
mapping, by the identification information according to an ID of an SL positioning reference signal or a user equipment, SL positioning reference signals corresponding to different first user equipments to different dedicated resources;

In a possible implementation, an ID hopping rule is associated with one or more of geographical location information, the source ID, the destination ID, a zone ID, or a communication range.

The positioning apparatus provided in the embodiments of this application can implement the processes implemented in the method embodiment of FIG. 2 and achieve the same technical effect. To avoid repetition, details are not described herein again.

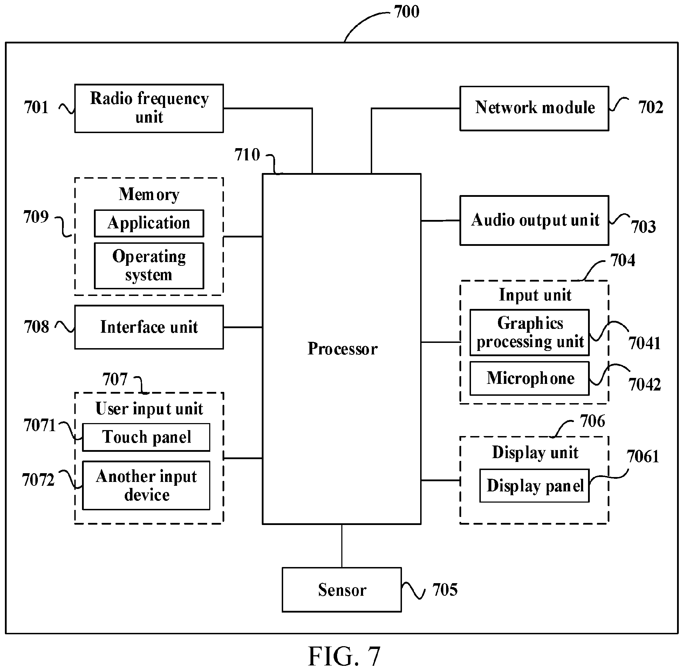

FIG. 7 is a schematic diagram of a hardware structure of a user equipment according to an embodiment of this application.

The user equipment 700 includes, but is not limited to, components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that, the user equipment 700 may further include a power supply (such as a battery) for supplying power to the components. Preferably, the power supply may be logically connected to the processor 710 by using a power management system, thereby implementing functions such as charging, discharging, and power consumption management by using the power management system. A user equipment structure shown in FIG. 7 does not constitute a limitation to the user equipment, and the user equipment may include more or fewer components than those shown in the figure, or some components may be combined, or a different component deployment may be used. Details are not described herein again.

It may be understood that, in the embodiments of this application, the input unit 704 may include a graphics processing unit (graphics processing unit, GPU) 7041 and a microphone 7042. The graphics processing unit 7041 processes image data of a static picture or a video obtained by an image capturing apparatus (for example, a camera) in a video capturing mode or an image capturing mode. The display unit 706 may include a display panel 7061, for example, a display panel 7061 configured in a form such as a liquid crystal display or an organic light-emitting diode. The user input unit 707 includes a touch panel 7061 and another input device 7072. The touch panel 7061 is also referred to as a touchscreen. The touch panel 7061 may include two parts: a touch detection apparatus and a touch controller. The another input device 7072 may include, but is not limited to, a physical keyboard, a functional key (such as a volume control key or a switch key), a track ball, a mouse, and a joystick, and the details will not be described herein again.

In this embodiment of this application, the radio frequency unit 701 receives downlink data from a network side device and sends the data to the processor 610 for processing; and sends uplink data to the network side device. Generally, the radio frequency unit 701 includes, but is not limited to, an antenna, at least one amplifier, a transceiver, a coupler, a low noise amplifier, a duplexer, and the like.

The memory 709 may be configured to store a software program or instructions and various data. The memory 709 may mainly include a program storage or instruction area and a data storage area. The program storage or instruction area may store an operating system, an application or instructions required by at least one function (for example, a sound playback function and an image playback function), or the like. In addition, the memory 709 may include a high speed random access memory, and may further include a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. For example, at least one magnetic disk storage device, a flash memory device, or another non-volatile solid-state storage device.

Optionally, the processor 710 may include one or more processing units. Optionally, the processor 710 may integrate an application processor and a modem processor. The application processor mainly processes an operating system, a user interface, an application or instructions, and the like. The modem processor mainly processes wireless communication, for example, a baseband processor. It may be understood that the modulation and demodulation processor may not be integrated into the processor 710.

The user equipment provided in the embodiments of this application can implement the processes implemented in the method embodiment of FIG. 2 and achieve the same technical effect. To avoid repetition, details are not described herein again.

An embodiment of this application further provides a computer program product, where the computer program product is stored in a non-volatile storage medium, and the computer program product is executed by at least one processor to implement steps of the method in FIG. 2.

An embodiment of this application further provides a readable storage medium. The readable storage medium may be non-volatile or volatile. The readable storage medium stores a program or instructions, the program or instructions, when executed by a processor, implementing the processes of the embodiments of the method shown in FIG. 2, and achieving the same technical effect. To avoid repetition, details are not described herein again.

The processor is a processor in the user equipment in the foregoing embodiments. The readable storage medium includes a computer-readable storage medium, for example, a read-only memory (Read-Only Memory, ROM), a random access memory (Random Access Memory, RAM), a magnetic disk, an optical disk, or the like.

An embodiment of this application further provides a chip, including a processor and a communication interface coupled to each other, the processor being configured to run a program or instructions of the network side device to implement the processes of the method embodiments in FIG. 2, and can achieve the same technical effects. To avoid repetition, details are not described herein again.

It should be understood that, the chip mentioned in this embodiment of this application may also be referred to as a system-level chip, a system chip, a chip system, a system on chip, or the like.

It is to be noted that, the term such as "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

According to the descriptions of the foregoing embodiments, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the related art may be implemented in the form of a software product. The computer software product is stored in a storage medium (such as a ROM/RAM, a magnetic disk, or an optical disc), and includes several instructions for instructing a user equipment (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

**Claims**

1.  A positioning method, comprising:

    transmitting, by a first user equipment, a sidelink SL positioning reference signal according to a mapping rule and/or a sequence definition, wherein
    the mapping rule is used for determining a mapping configuration of the SL positioning reference signal, the sequence definition is used for determining a sequence feature and/or a pattern of the SL positioning reference signal, the SL positioning reference signal is used for determining location information of the first user equipment and/or a second user equipment, and the second user equipment is an opposite user equipment that performs SL communication or SL positioning with the first user equipment.

2.  The method according to claim 1, wherein the SL positioning reference signal comprises one or more of the following:

    a group SL positioning reference signal, wherein the SL positioning reference signal is used for one or more groups;
    a zone SL positioning reference signal, wherein the SL positioning reference signal is used for one or more zones;
    a UE-specific SL positioning reference signal, wherein the SL positioning reference signal is used for a specific user equipment; and
    a cell, transmission and reception point TRP, or road side unit RSU specific SL positioning reference signal, wherein the SL positioning reference signal is associated with a geographical location, and one geographical location is associated with one or more SL positioning reference signals.

3.  The method according to claim 1, wherein the SL positioning reference signal and a UU positioning reference signal have partially same mapping rules and/or sequence definitions or completely same mapping rules and/or sequence definitions.

4.  The method according to claim 1, wherein in a case that there are a plurality of SL positioning reference signals, and the plurality of SL positioning reference signals have partially same mapping rules and/or sequence definitions or completely same mapping rules and/or sequence definitions, the method further comprises any one of the following:

    sending or measuring, by the first user equipment, the plurality of SL positioning reference signals according to first indication information;
    expecting, by the first user equipment, no sending or measurement on the SL positioning reference signals; and
    determining, by the first user equipment according to a priority rule, to send or measure the SL positioning reference signals.

5.  The method according to claim 1, wherein in a case that there are a plurality of SL positioning reference signals, and the plurality of SL positioning reference signals have a same target user equipment,
    if the target user equipment is a receive user equipment, the target user equipment has one or more of the following operations:

    measuring one SL positioning reference signal;
    measuring A1 SL positioning reference signals according to a capability, wherein A1 is not greater than the capability; and
    measuring A2 SL positioning reference signals according to a priority, wherein A1 corresponds to the priority; or
    if the target user equipment is a transmit user equipment, the target user equipment has one or more of the following operations: sending one SL positioning reference signal;
    sending A1 SL positioning reference signals according to a capability, wherein A1 is not greater than the capability; and
    sending A2 SL positioning reference signals according to a priority, wherein A1 corresponds to the priority.

6.  The method according to claim 1, wherein in a case that there are a plurality of SL positioning reference signals, and the plurality of SL positioning reference signals are from different carriers or frequency layers,
    if the first user equipment is a receive user equipment, the method further comprises any one of the following:

    measuring, by the first user equipment, SL positioning reference signals on one carrier or frequency layer;

measuring, by the first user equipment, SL positioning reference signals on B 1 carriers or frequency layers according to a capability, wherein B 1 is not greater than the capability; and
measuring, by the first user equipment, SL positioning reference signals on B2 carriers or frequency layers according to a priority, wherein B2 corresponds to the priority;
or
if the first user equipment is a transmit user equipment, the method further comprises any one of the following:

sending, by the first user equipment, SL positioning reference signals on one carrier or frequency layer;
sending, by the first user equipment, SL positioning reference signals on B 1 carriers or frequency layers according to a capability, wherein B 1 is not greater than the capability; and
sending, by the first user equipment, SL positioning reference signals on B2 carriers or frequency layers according to a priority, wherein B2 corresponds to the priority.

7. The method according to claim 3, 5, or 6, further comprising any one of the following:

sending or measuring, by the first user equipment, the SL positioning reference signal ;
expecting, by the first user equipment, no sending or measurement on the SL positioning reference signal;
expecting, by the first user equipment, no sending or measurement on the plurality of SL positioning reference signals;
expecting, by the first user equipment, no sending or measurement on SL positioning reference signals on a plurality of carriers or frequency layers; and
determining, by the first user equipment according to a priority rule, to send or measure the SL positioning reference signal and/or the UU positioning reference signal.

8. The method according to claim 3, 5, or 6, wherein
the method further comprises:

receiving, by the first user equipment, second indication information, wherein the second indication information is used for indicating that the first user equipment sends or measures the SL positioning reference signal, and the second indication information is indication information sent by a network side, or the second indication information is indication information sent by a scheduling user equipment or the second user equipment, or the second indication information is indication information sent by a higher layer of the first user equipment;
or
sending, by the first user equipment, second indication information to the second user equipment, wherein the second indication information is used for indicating that the second user equipment sends or measures the SL positioning reference signal.

9. The method according to claim 1, wherein the mapping rule comprises a first time-domain mapping rule; and
the first time-domain mapping rule comprises one or more of the following:

a number of orthogonal frequency division multiplexing OFDM symbols of the SL positioning reference signal;
a maximum number of OFDM symbols of the SL positioning reference signal; and
the first OFDM symbol of the SL positioning reference signal is located on an $X^{th}$ symbol in a slot, X being a positive integer.

10. The method according to claim 1, wherein the mapping rule comprises a second time-domain mapping rule; and
the second time-domain mapping rule comprises one or more of the following:

continuously sending the SL positioning reference signal on OFDM symbols at locations expect a first location;
sending the SL positioning reference signal on an OFDM symbol at a location after the first location;
sending the SL positioning reference signal on an OFDM symbol at a location other than the first location;
skipping sending the SL positioning reference signal on an OFDM symbol corresponding to the first location; and
reusing the SL positioning reference signal at a second location, or punching the SL positioning reference signal at a second location, wherein
the first location comprises one or more of the following:

time-domain locations of sidelink synchronization signal blocks S-SS blocks and/or physical sidelink broadcast channel blocks PSBCH blocks, or time-frequency locations of S-SS blocks and/or PSBCH blocks;

time-domain locations of a primary synchronization signal PSS, a secondary synchronization signal SSS, and/or a physical broadcast synchronization channel PBSCH, or time-frequency locations of a PSS, an SSS, and/or a PBSCH;

a time-domain location of second stage sidelink control information SCI or a time-frequency location of second stage SCI;

time-domain locations of a channel-state information reference signal CSI-RS and/or a demodulation reference signal DMRS, or time-frequency locations of a CSI-RS and/or a DMRS; and

time-domain locations of automatic gain control AGC and/or a physical sidelink feedback channel PSFCH, or time-frequency locations of AGC and/or a PSFCH; and

the second location comprises one or more of the following:

a location of a physical sidelink control channel PSSCH;
a location of SL data;
a location of uplink UL data; and
a location of a physical uplink shared channel PUSCH.

11. The method according to claim 1, wherein the mapping rule comprises a third time-domain mapping rule; and the third time-domain mapping rule comprises one or more of the following:

a number of OFDM symbols of the SL positioning reference signal is fixed;
a location of an OFDM symbol of the SL positioning reference signal is fixed; and
a location of a start OFDM symbol of the SL positioning reference signal is fixed.

12. The method according to claim 1, wherein the mapping rule comprises that the first user equipment receives or sends third indication information, wherein
the third indication information is used for indicating that the SL positioning reference signal is transmitted on an SL subframe and/or a UL subframe, or the third indication information is used for indicating cross-band mapping, cross-carrier mapping, or cross-frequency-layer mapping, or the third indication information comprises a number or locations of OFDM symbols.

13. The method according to claim 1, wherein the mapping rule comprises:
mapping the SL positioning reference signal to a UL subframe.

14. The method according to claim 1, wherein the mapping rule comprises a first power mapping rule; and the first power mapping rule comprises one or more of the following:

the SL positioning reference signal is obtained by multiplying a first sequence by a first power coefficient;
a transmit power of the SL positioning reference signal is less than a maximum predefined power;
the transmit power of the SL positioning reference signal is a fixed value; and
the transmit power of the SL positioning reference signal is as follows:

$$P_{0,s-prs} + 10\log_{10}\left(2^{\mu} \cdot M_{RB}^{S-PRS}\right)\alpha_{s-prs} \cdot PL,$$

wherein

$P_{0,s-prs}$, $\alpha_{s-prs}$ is a power adjustment parameter of the SL positioning reference signal, $M_{RB}^{S-PRS}$ is a number of resource blocks RBs of the SL positioning reference signal, and PL is a path loss of a power reference signal, wherein the power reference signal comprises one or more of the following:

a synchronization signal block SS block and/or a physical broadcast channel PBCH block corresponding to a master information block MIB;
an RS used for determining a transmit power of a PUSCH scheduled by a DCI format 0_0;
a predefined reference signal; and
an RS used for a transmit power of a PSCCH, a PSSCH, or a PSFCH scheduled by a sidelink.

15. The method according to claim 1, wherein the mapping rule comprises a first frequency-domain mapping rule; and

the first frequency-domain mapping rule comprises one or more of the following:

frequency-domain physical resource blocks PRBs of the SL positioning reference signal are continuous;
a comb value of a comb structure of the SL positioning reference signal is the same as that of DMRS blocks, S-SS blocks, and/or PSBCH blocks;
the SL positioning reference signal has a same numerology as the S-SS blocks and/or the PSBCH blocks, or the SL positioning reference signal has a same numerology as a sidelink bandwidth part SL BWP;
the SL positioning reference signal has a same bandwidth as the SL BWP, the DMRS, and the PSSCH, or the SL positioning reference signal is in the SL BWP;
the SL positioning reference signal has a same reference point point A as the SL BWP, the DMRS, and the PSSCH, or the SL positioning reference signal has a same point A as the S-SS blocks and/or the PSBCH blocks; and
the SL positioning reference signal has a same subcarrier 0 as the SL BWP, the DMRS, and/or the PSSCH, or the SL positioning reference signal has the same point A as the S-SS blocks and/or the PSBCH blocks.

16. The method according to claim 1, wherein the mapping rule comprises a second frequency-domain mapping rule; and the second frequency-domain mapping rule comprises one or more of the following:

continuously sending the SL positioning reference signal on frequency-domain PRBs or REs at locations expect a third location;
continuously sending the SL positioning reference signal on a frequency-domain PRB or RE at a location after the third location;
sending the SL positioning reference signal on a frequency-domain PRB or RE at a location other than the third location;
skipping sending the SL positioning reference signal on a PRB or an RE corresponding to the third location; and
reusing the SL positioning reference signal at a fourth location, or punching the SL positioning reference signal at a fourth location, wherein
the third location comprises one or more of the following:

time-domain locations of S-SS blocks and/or PSBCH blocks, or time-frequency locations of S-SS blocks and/or PSBCH blocks;
time-domain locations of a PSS, an SSS, and/or a PBSCH, or time-frequency locations of a PSS, an SSS, and/or a PBSCH;
a time-domain location of second stage SCI or a time-frequency location of second stage SCI;
time-domain locations of a CSI-RS and/or a DMRS, or time-frequency locations of a CSI-RS and/or a DMRS; and
time-domain locations of AGC and/or a PSFCH, or time-frequency locations of AGC and/or a PSFCH; and
the fourth location comprises one or more of the following:

a location of a PSSCH;
a location of SL data;
a location of UL data; and
a location of a PUSCH.

17. The method according to claim 1, wherein the mapping rule comprises a second stage SCI mapping rule; and the second stage SCI mapping rule comprises one or more of the following:

punching punching, by second stage SCI, on the SL positioning reference signal; and
performing, by the second stage SCI, rate matching rate matching on the SL positioning reference signal.

18. The method according to claim 1, wherein the mapping rule comprises a third frequency-domain mapping rule; and the third frequency-domain mapping rule comprises one or more of the following:

a number of frequency-domain PRBs of the SL positioning reference signal; and
a comb value of the SL positioning reference signal;
a numerology of the SL positioning reference signal;
a bandwidth of the SL positioning reference signal;
a point A of the SL positioning reference signal;

a subcarrier 0 of the SL positioning reference signal; and

determining the number of frequency-domain PRBs, the comb value, the numerology, the bandwidth, the point A, and/or the subcarrier 0 of the SL positioning reference signal according to a parameter of a pre-defined or pre-configured SL-frequencylayer, or a pre-configured SL-frequencylayer in first information, wherein the first information is configuration information obtained from a network side, the second user equipment, or a scheduling user equipment.

19. The method according to any one of claims 8 to 16, further comprising:

determining the number of OFDM symbols, the maximum number of OFDM symbols, that the first OFDM symbol is located on the $X^{th}$ symbol in the slot, the first power coefficient, the point A, a number of frequency-domain PRBs, the bandwidth, the numerology, and/or the comb value in one or more of the following manners:

determining by the first user equipment;

determining by the first user equipment according to a protocol agreement or a preconfiguration;

determining by the first user equipment according to first configuration information obtained from a network side; and

determining by the first user equipment according to second configuration information sent by the second user equipment or the scheduling user equipment.

20. The method according to claim 1, wherein the sequence definition comprises one or more of the following:

a sequence of the SL positioning reference signal is a gold sequence, wherein the gold sequence is as follows:

$$r_l(m) = \frac{1}{\sqrt{2}}\big(1 - 2c(2m)\big) + j\frac{1}{\sqrt{2}}\big(1 - 2c(2m + 1)\big),$$

wherein

$c(2m)$ is a value corresponding to a $(2m)^{th}$ location in $c(n)$, $c(n)$ is a pseudo-random sequence, and m is a positive integer;

the sequence of the SL positioning reference signal is a ZC sequence, and the ZC sequence is as follows:

$$r^{(p_i)}(n, l') = r_{u,v}^{(\alpha_i, \delta)}(n) = e^{j\alpha n}\overline{r_{u,v}}(n),$$

wherein

$\overline{r_{u,v}}(n)$ is a base sequence, u is a number of groups, v is a number of base sequences, and $\alpha$ is a cyclic shift;

$r^{(p_i)}(n,l')$ is a sounding reference signal SRS sequence at a port $p_i$, n is a value of a frequency domain, and l' is a value of a time-domain symbol;

$r_{u,v}^{(\alpha_i, \delta)}(n)$ is a ZC sequence obtained by the base sequence according to a cyclic shift $\alpha i$ and a function $\delta$ of a comb structure;

the sequence of the SL positioning reference signal is a Pi/2 binary phase shift keying BPSK sequence; and

the sequence of the SL positioning reference signal is a CGS sequence.

21. The method according to claim 20, wherein an initial value of the $c(n)$ pseudo-random sequence is associated with one or more of the following:

a cell ID or a group ID;

a destination ID, or a source ID;

cyclic redundancy check CRC corresponding to a physical sidelink control channel PSCCH;

downlink synchronization signal identities IDs corresponding to S-SS blocks and/or PSBCH blocks;

a scrambling-code identity of the SL positioning reference signal;

a sequence ID or a group ID of the SL positioning reference signal;

a port identity port ID of the SL positioning reference signal, or panel identification information PANEL ID;

a symbol of the sequence of the SL positioning reference signal; and

a slot of the sequence of the SL positioning reference signal.

22. The method according to claim 18, wherein a sequence of the SL positioning reference signal is associated with one or more the following:

carrying one or more pieces of user identification information, user group identification information, user time information, user time source information, scrambling information, and/or CRC information;
carrying one or more cyclic shifts, cyclic shift pairs, and/or cyclic shift groups;
carrying transmission occasion information of the SL positioning reference signal;
carrying a transmission channel, a transmission resource, a corresponding resource pool, and/or information related to a corresponding BWP of one or more SL positioning reference signals;
carrying resource identification of the sequence or resource set identity ID information of the sequence; and
carrying geographical location information.

23. The method according to claim 21 or 22, wherein the initial value of c(n) is one or more of the following:

$$c_{init} = \left(2^{10}\left(N_{symb}^{slot}n_{s,f}^{\mu} + l + 1\right)(2n_{ID} + 1) + n_{ID}\right) \bmod 2^{31};$$

$$c_{init} = \left(2^{17}\left(N_{symb}^{slot}n_{s,f}^{\mu} + l + 1\right)(2N_{ID} + 1) + 2N_{ID}\right) \bmod 2^{31} \quad ,$$

and $N_{ID} \in \{0,1, ...,65535\}$; and

$$c_{init} = \left(2^{22}\left\lfloor\frac{n_{ID,seq}^{PRS}}{1024}\right\rfloor + 2^{10}\left(N_{symb}^{slot}n_{s,f}^{\mu} + l + 1\right)\left(2\left(n_{ID,seq}^{PRS} \bmod 1024\right) + 1\right) + \right.$$

$$\left.\left(n_{ID,seq}^{PRS} \bmod 1024\right)\right) \bmod 2^{31},$$

wherein

$N_{symb}^{slot}$ is a number of symbols in a corresponding SL slot, $n_{s,f}^{\mu}$ is the slot of the sequence of the SL positioning reference signal, $n_{ID,seq}^{PRS}$ is identification information of the sequence of the SL positioning reference signal, and l is a symbol of the sequence of the SL positioning reference signal.

24. The method according to claim 1, wherein the mapping rule further comprises: mapping the SL positioning reference signal to a first dedicated resource.

25. The method according to claim 24, further comprising: transmitting, by the first user equipment, first dedicated resource configuration information, wherein the first dedicated resource configuration information comprises one or more of the following:

bandwidth information of the first dedicated resource;
point A and startRB information of the first dedicated resource;
numerology information of the first dedicated resource;
a start time point of the first dedicated resource;
an end time point of the first dedicated resource;
a duration of the first dedicated resource; and
first dedicated resource pool information.

26. The method according to claim 24, further comprising:

before the first user equipment sends the SL positioning reference signal, detecting an RSRP on a first dedicated resource pool or a first reservation resource pool or a scheduled resource and listening to SCI, and determining a transmit resource of the SL positioning reference signal; or

before the first user equipment schedules another user equipment to send the SL positioning reference signal, detecting an RSRP on a first dedicated resource pool or a first reservation resource pool or a scheduled resource and listening to SCI, and determining a transmit resource of the SL positioning reference signal, wherein

the SL positioning reference signal is sent in a case that there is a dedicated resource pool or a resource whose RSRP is less than a threshold 1, or it is not detected through listening that a dedicated resource pool or a resource is scheduled by the SCI, or there is a reservation resource pool of a dedicated resource pool whose RSRP is less than a threshold 1.

27. The method according to claim 1, wherein transmit resources or transmit sequences of SL positioning reference signals corresponding to different first user equipments meet one or more the following:

an SL positioning reference signal ID unique to the first user equipment is configured; and

mapping rules or sequence definitions used by the different first user equipments to send the SL positioning reference signals are different.

28. The method according to claim 21, wherein an ID hopping rule is associated with one or more of geographical location information, the source ID, the destination ID, a zone ID, or a communication range.

29. A positioning apparatus, comprising:

a transmission module, configured to transmit, by a first user equipment, an SL positioning reference signal according to a mapping rule and/or a sequence definition, wherein

the mapping rule is used for determining a mapping configuration of the SL positioning reference signal, the sequence definition is used for determining a sequence feature and/or a pattern of the SL positioning reference signal, the SL positioning reference signal is used for determining location information of the first user equipment and/or a second user equipment, and the second user equipment is an opposite user equipment that performs SL communication or SL positioning with the first user equipment.

30. A user equipment, comprising a processor, a memory, and a program stored in the memory and executable on the processor, the program, when executed by the processor, implementing the steps of the method according to any one of claims 1 to 28.

31. A readable storage medium, storing a program or instructions, the program or instructions, when executed by a processor, implementing the steps of the method according to any one of claims 1 to 28.

32. A computer program product, stored in a non-volatile storage medium, the computer program product being executed by at least one processor to implement the steps of the method according to any one of claims 1 to 28.

33. A chip, comprising a processor and a communication interface, wherein the communication interface is coupled to the processor, and the processor is configured to run a program or instructions to implement the steps of the method according to any one of claims 1 to 28.

34. A communication device, configured to perform the steps of the method according to any one of claims 1 to 28.

Uplink

Downlink

Sidelink

FIG. 1a

Continue to decode a PSCCH of another UE and measure corresponding PSSCH power

↓

Collect sensing information, including a reserved resource and SL-RERP measurement

↓

Exclude owned and high-power resources from a candidate resource set

↓

Select a Tx resource semi-persistently, or select UO to maximum reservation, where a start time is 'm'

↓

Re-evaluate resource selection

↓

Whether to reselect trigger — Yes →

No ↓

Start transmission

↓

If yes, restart the procedure    Whether to reselect trigger    If no, continue to use the reservation

FIG. 1b

201

A first user equipment transmits an SL positioning reference signal according to a mapping rule and/or a sequence definition

FIG. 2

Comb-4, and a number of symbols is 8

FIG. 3a

Comb-4, and a number of symbols is 12

FIG. 3b

Comb-2, and a number of symbols is 6

# FIG. 3c

Comb-2, and a number of symbols is 4

# FIG. 3d

Example of SRS comb-8

FIG. 3e

Comb-6, RE shift=3, L=2, and
lowest RE=0

FIG. 3f

Comb-6, RE shift=3, L=6, and
lowest RE=0

FIG. 3g

Comb-4, RE shift=1, L=4, and
lowest RE=0

FIG. 3h

Comb-4, RE shift=1, L=8, and
lowest RE=0

FIG. 3i

Comb-4, RE shift=1, L=8, and
lowest RE=0

FIG. 3j

Comb-12, RE shift=1, L=12, and lowest RE=0

FIG. 3k

Comb-12, RE shift=1, L=6, and lowest RE=0

FIG. 3l

Pattern of discontinuous symbols

FIG. 3m

FIG. 4a

FIG. 4b

▤ PSCCH DMRS

⊠ PSSCH DMRS

▯ SL-PRS

FIG. 5

600

**Transmission module**
**601**

FIG. 6

700

Radio frequency unit — 701

Network module — 702

710

Memory — 709
Application
Operating system

Audio output unit — 703

Input unit — 704
Graphics processing unit — 7041
Microphone — 7042

Interface unit — 708

Processor

User input unit — 707
Touch panel — 7071
Another input device — 7072

Display unit — 706
Display panel — 7061

Sensor — 705

FIG. 7

| | INTERNATIONAL SEARCH REPORT | International application No. |
|---|---|---|
| | | **PCT/CN2022/106212** |

**A. CLASSIFICATION OF SUBJECT MATTER**

H04W 64/00(2009.01)i

According to International Patent Classification (IPC) or to both national classification and IPC

**B. FIELDS SEARCHED**

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

CNPAT, CNKI, EPODOC, WPI, 3GPP: 旁链路, 边链路, 侧链路, 副链路, 参考信号, 定位, 位置, 序列, 图样, 映射, 时域, 频域, 符号, 组, 区域, 小区, sidelink, SL, reference, signal+, RS, sequence, position+, pattern, map+, ofdm, time, domain, frequency, group+, cell, area, UU

**C. DOCUMENTS CONSIDERED TO BE RELEVANT**

| Category* | Citation of document, with indication, where appropriate, of the relevant passages | Relevant to claim No. |
|---|---|---|
| X | WO 2021097598 A1 (HUAWEI TECHNOLOGIES CO., LTD.) 27 May 2021 (2021-05-27) description, page 10, line 29 to page 13, line 34, and figure 5 | 1-34 |
| X | WO 2021091245 A1 (LG ELECTRONICS INC.) 14 May 2021 (2021-05-14) description, paragraphs [60]-[80], and figures 1-3 | 1-34 |
| A | WO 2021133104 A1 (LG ELECTRONICS INC.) 01 July 2021 (2021-07-01) entire document | 1-34 |
| A | WO 2021086114 A1 (LG ELECTRONICS INC.) 06 May 2021 (2021-05-06) entire document | 1-34 |
| A | LG ELECTRONICS. "Discussion on physical layer structure for NR sidelink" *3GPP TSG RAN WG1 Meeting #100 R1-2000781*, 06 March 2020 (2020-03-06), entire document | 1-34 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2022** | **23 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/106212**

| Patent document cited in search report | | | Publication date (day/month/year) | Patent family member(s) | | | Publication date (day/month/year) |
|---|---|---|---|---|---|---|---|
| WO | 2021097598 | A1 | 27 May 2021 | AU | 2019475080 | A1 | 16 June 2022 |
| WO | 2021091245 | A1 | 14 May 2021 | KR | 20220065806 | A | 20 May 2022 |
| WO | 2021133104 | A1 | 01 July 2021 | None | | | |
| WO | 2021086114 | A1 | 06 May 2021 | KR | 20220092916 | A | 04 July 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110815286